# EUROPEAN PATENT APPLICATION

(11) **EP 3 425 433 A1**
(43) Date of publication of application: **09.01.2019**
(21) Application number: 17760161.4
(22) Date of filing: 03.03.2017
(51) Int. Cl.: G02B 6/02, C03B 37/012, C03B 37/027, G02B 6/032, G02B 6/036

(54) **OPTICAL FIBER, OPTICAL SYSTEM, AND METHOD FOR MANUFACTURING OPTICAL FIBER**

(30) Priority: 03.03.2016 JP 2016041343
(71) Applicant: Furukawa Electric Co., Ltd., Chiyoda-ku Tokyo 100-8322 (JP)
(72) Inventor: MUKASA Kazunori, Tokyo 100-8322 (JP); TSUCHIDA Yukihiro, Tokyo 100-8322 (JP)
(74) Representative: J A Kemp
(86) International application number: PCT/JP2017/008451
(87) International publication number: WO 2017/150699

(57) **Abstract**

An optical fiber that has an air layer in a clad portion and can suppress a degradation in a transmission characteristic caused by a support member present in the air layer is provided. The optical fiber includes a core (1), tubular layers (22 to 25) concentrically arranged around the core (1) via the air layer, and support members (3a to 31) that are arranged to the air layer and connect the core (1) with the tubular layers (22 to 25), and in the optical fiber, in a cross-sectional view of a longitudinal direction of the optical fiber, a distance between support members (3a to 31) in a circumferential direction of the optical fiber is wider than a double thickness of the air layer in which the support members (3a to 31) are arranged.

## Description

### Technical Field

The present invention relates to an optical fiber having an air layer at a clad portion such as Bragg air core fibers and air clad fibers, an optical system and a method for producing the optical fiber.

### Background Art

Conventionally, optical fibers are known for having a tubular air layer at a clad portion such as the Bragg air core fiber and the air clad fiber to surround the core (see NPLs 1 and 2). As a method for producing the optical fiber described in NPLs 1 and 2, a stack-and-draw method is used in which the tubular member made of the quartz glass and a plurality of capillaries made of the quartz glass are alternately laminated to form a base material and the formed base material is drawn.

In the above described stack-and-draw method, when the base material is formed, capillaries are packed without gaps between the tubular members in the circumferential direction of the optical fiber, and a large number of capillaries are arrayed in close contact with each other. By the drawing thereafter, at the same time the air layer is formed by the array of the capillary, the contact portion of the adjacent capillaries and a part of the tubular member sandwiching the capillary are melted, and a wall-shaped support member is formed along a longitudinal direction of the optical fiber.

Therefore, in the optical fiber described in NPLs 1 and 2, as a large number of support members corresponding to the capillaries are present in the air layer, the thickness of the support member increases, which leads to the degradation in the transmission characteristics.

### Citation List

### Non Patent Literature

NPL 1: G Vienne, 15 others, "First demonstration of air-silica Bragg fiber," Optical Fiber Communication Conference 2004 (OFC2004), Los Angeles, California, USA, p PD25, 2004
NPL 2: W. J. Wadsworth, six others, "Very high numerical aperture fibers," IEEE, Photonics Technology Letters, Vol. 16, No. 3, p 843-845, 2004

### Summary of Invention

### Technical Problem

An object of the present invention is to provide an optical fiber that has an air layer in a clad portion and can suppress the degradation in the transmission characteristics caused by a support member present in the air layer, an optical system and a method for producing the optical fiber.

### Solution to Problem

According to one aspect of the present invention, the optical fiber includes a core, a tubular layer concentrically arranged around the core via an air layer, and a support member that is arranged in the air layer and connects the core and the tubular layer, and in the cross-sectional view of the longitudinal direction of the optical fiber, the distance between the support members of the each support member in the circumferential direction of the optical fiber is wider than the double thickness of the air layer in which the support member is arranged.

In the optical fiber according to one aspect of the present invention, the support member is configured from one support plate or two support plates paired in a wall shape.

In the optical fiber according to one aspect of the present invention, the support member is configured from one support plate or two support plates paired in a wall shape with a member inner wall spacing being narrower than the distance between the support members.

In the optical fiber according to one aspect of the present invention, the core is a hole core inside a tubular core guide tube.

In the optical fiber according to one aspect of the present invention, the core is made of a glass, and the cladding layer that confines the light is configured from the air layer and the tubular layer arranged via the air layer.

In the optical fiber according to one aspect of the present invention, the core is made of the glass, and the core includes parts that are different from the cores in the refractive index.

In the optical fiber according to one aspect of the present invention, the tubular layer is a quartz glass or a dopant-doped quartz glass.

In the optical fiber according to one aspect of the present invention, a plurality of support members are arranged spaced apart from one another along the circumferential direction of the optical fiber, and the distance between the support members of the different support members in the circumferential direction of the optical fiber is wider than the double thickness of the corresponding air layer.

In the optical fiber according to one aspect of the present invention, the support member and the tubular layer have the same viscosity.

In the optical fiber according to one aspect of the present invention, the support member and the tubular layer are made of the same material.

In the optical fiber according to one aspect of the present invention, the thickness in the circumferential direction of the optical fiber of each of the one support plate or the two support plates paired in a wall shape is the dimension where the mode of the light transmitted through the core may not be localized.

In the optical fiber according to one aspect of the present invention, the thickness in the circumferential direction of the optical fiber of each of the one support plate or the two support plates paired in a wall shape is thinner than the wavelength of the light transmitted through the core .

In the optical fiber according to one aspect of the present invention, a plurality of tubular layers are periodically and concentrically arranged by sandwiching a plurality of air layers, the support member is arranged to each of a plurality of air layers, and in the at least one or more air layers, the distance between the support members is wider than the double thickness of the corresponding air layer.

In the optical fiber according to one aspect of the present invention, the support member arranged to each of a plurality of air layers are arrayed on a straight line along the same radial direction respectively.

In the optical fiber according to one aspect of the present invention, the support member is arranged by including a position of each of a plurality of air layers, i.e., the different radial direction.

In the optical fiber according to one aspect of the present invention, the number of support members differs for each of a plurality of air layers.

In the optical fiber according to one aspect of the present invention, the number of support members arranged to the air layer close to the center side is smaller than the number of support members arranged to the air layer close to the outer peripheral side, and in all air layers, the distance between the support members is wider than the double thickness of the corresponding air layer.

Another aspect of the present invention is the optical system using the optical fiber according to one aspect of the present invention.

A method for producing the optical fiber according to still another aspect of the present invention includes: concentrically arranging the tubular layer base material layer around the core base material by sandwiching the air layer; inserting the support base material part to the air layer in a manner to connect the core base material with the tubular layer base material layer and forming the fiber base material; and melting and drawing the fiber base material such that the core base material serves as the core or the core guide tube, the tubular layer base material layer serves as the tubular layer, and the support base material part serves as the support member, and in the method for producing the optical fiber, in the cross-sectional view of the longitudinal direction of the optical fiber, the distance between the support members of the each support member in the circumferential direction of the optical fiber is wider than the double thickness of the air layer in which the support member is arranged.

In the method for producing the optical fiber according to one aspect of the present invention, the support base material part is the capillary, and the drawing is the drawing of the fiber such that the wall of the capillary serves as support plates paired with each other.

### Advantageous Effects of Invention

According to the present invention, it is possible to provide the optical fiber that has the air layer in the clad portion and can suppress the degradation in the transmission characteristics caused by the support member present in the air layer, the optical system, and the method for producing the optical fiber.

### Brief Description of Drawings

FIG. 1 is a cross-sectional view perpendicular to a longitudinal direction illustrating one example of the optical fiber according to the first embodiment of the present invention;
FIG. 2 is a partially enlarged view of FIG. 1;
FIG. 3 is an end view of the base material for producing the optical fiber according to the first embodiment of the present invention, as seen from the longitudinal direction;
FIG. 4A is a plan view of a top plate for producing the optical fiber according to the first embodiment of the present invention, and FIG. 4B is a plan view of a bottom plate for producing the optical fiber according to the first embodiment of the present invention;
FIGS. 5A and 5B are schematic diagrams illustrating how the base material for producing the optical fiber according to the first embodiment of the present invention is prepared;
FIG. 6 is the cross-sectional view perpendicular to the longitudinal direction of the base material into which the capillary for producing the optical fiber according to the first embodiment of the present invention is inserted;
FIGS. 7A and 7B are cross-sectional views perpendicular to the longitudinal direction illustrating one example of the optical fiber according to the first variation of the first embodiment of the present invention;
FIGS. 8A and 8B are the cross-sectional views perpendicular to the longitudinal direction illustrating one example of the optical fiber according to the first variation of the first embodiment of the present invention;
FIGS. 9A and 9B are the cross-sectional views perpendicular to the longitudinal direction illustrating one example of the optical fiber according to the first variation of the first embodiment of the present invention;
FIGS. 10A and 10B are the cross-sectional views perpendicular to the longitudinal direction illustrating one example of the optical fiber according to the second variation of the first embodiment of the present invention;
FIG. 11A is the cross-sectional view perpendicular to the longitudinal direction illustrating one example of the optical fiber according to the third variation of the first embodiment of the present invention, and FIG. 11B is the cross-sectional view perpendicular to the longitudinal direction illustrating one example of the optical fiber according to the fourth variation of the first embodiment of the present invention;
FIGS. 12A and 12B are the cross-sectional views perpendicular to the longitudinal direction illustrating one example of the optical fiber according to the fifth variation of the first embodiment of the present invention;
FIG. 13 is the cross-sectional view perpendicular to the longitudinal direction illustrating one example of the optical fiber according to the second embodiment of the present invention;
FIG. 14 is a plan view of the top plate for producing the optical fiber according to the second embodiment of the present invention;
FIG. 15 is the cross-sectional view perpendicular to the longitudinal direction of the base material into which the capillary for producing the optical fiber according to the second embodiment of the present invention is inserted;
FIGS. 16A and 16B are the cross-sectional views perpendicular to the longitudinal direction illustrating one example of the optical fiber according to the first variation of the second embodiment of the present invention;
FIGS. 17A and 17B are the cross-sectional views perpendicular to the longitudinal direction illustrating one example of the optical fiber according to the second variation of the second embodiment of the present invention;
FIG. 18A is the cross-sectional view perpendicular to the longitudinal direction illustrating one example of the optical fiber according to the third variation of the second embodiment of the present invention, and FIG. 18B is the cross-sectional view perpendicular to the longitudinal direction illustrating one example of the optical fiber according to the fourth variation of the second embodiment of the present invention;
FIGS. 19A and 19B are the cross-sectional views perpendicular to the longitudinal direction illustrating one example of the optical fiber according to the fifth variation of the second embodiment of the present invention;
FIG. 20A is the cross-sectional view perpendicular to the longitudinal direction illustrating the hole core fiber according to an example of the second embodiment of the present invention, and FIG. 20B illustrates a light intensity distribution of the hole core fiber illustrated in FIG. 20A;
FIG. 21 a graph illustrating a simulation result of a confinement loss when a thickness of the support plate is changed in the hole core fiber having a four-layer structure according to an example of the second embodiment of the present invention;
FIG. 22 is a graph illustrating the simulation result of the confinement loss when the thickness of the support plate is changed in the hole core fiber having the five-layer structure according to the example of the second embodiment of the present invention;
FIG. 23 is the cross-sectional view perpendicular to the longitudinal direction illustrating one example of the optical fiber according to another embodiment of the present invention;
FIG. 24 is the cross-sectional view perpendicular to the longitudinal direction illustrating another example of the optical fiber according to another embodiment of the present invention;
FIG. 25 is the cross-sectional view perpendicular to the longitudinal direction illustrating a still another example of the optical fiber according to another embodiment of the present invention;
FIG. 26 is the cross-sectional view perpendicular to the longitudinal direction illustrating a still another example of the optical fiber according to another embodiment of the present invention;
FIG. 27 is a schematic graph concerning an optical fiber design for selectively propagating the light of the desired wavelength according to another embodiment of the present invention;
FIG. 28A is a schematic diagram illustrating one example of a high power application of a vacancy clad fiber according to another embodiment of the present invention, and FIG. 28B is a schematic diagram illustrating one example of a high power application of the hole core fiber according to another embodiment of the present invention;
FIG. 29 is the cross-sectional view perpendicular to the longitudinal direction illustrating the optical fiber according to a first comparative example;
FIG. 30 is a partially enlarged view of FIG. 29; and
FIG. 31 is the cross-sectional view perpendicular to the longitudinal direction illustrating the optical fiber according to a second comparative example.

### Description of Embodiments

With reference to the drawings, the first and second embodiments of the present invention are described below. In the illustrations of the drawings referred to in the following description, the same or similar components are denoted by the same or similar reference numerals. However, note that the drawings are schematic, and the relationship between the thickness and the plane dimension, the ratio of the thickness of each layer and the like are different from the actual one. Therefore, the specific thickness and dimensions need to be determined with reference to the following explanation. Needless to say, the drawings include components having different dimensional relationships and ratios.

Further, the first and second embodiments described below exemplify the optical fiber and the method for producing the optical fiber that embody the technical idea of the present invention, and the technical idea of the present invention does not identify the quality of material of the component part, the shape thereof, the structure, the arrangement and the like to the following. The technical idea of the present invention can be changed variously within the technical scope defined by the claims in CLAIM.

### (First Embodiment)

### <Configuration of Optical Fiber>

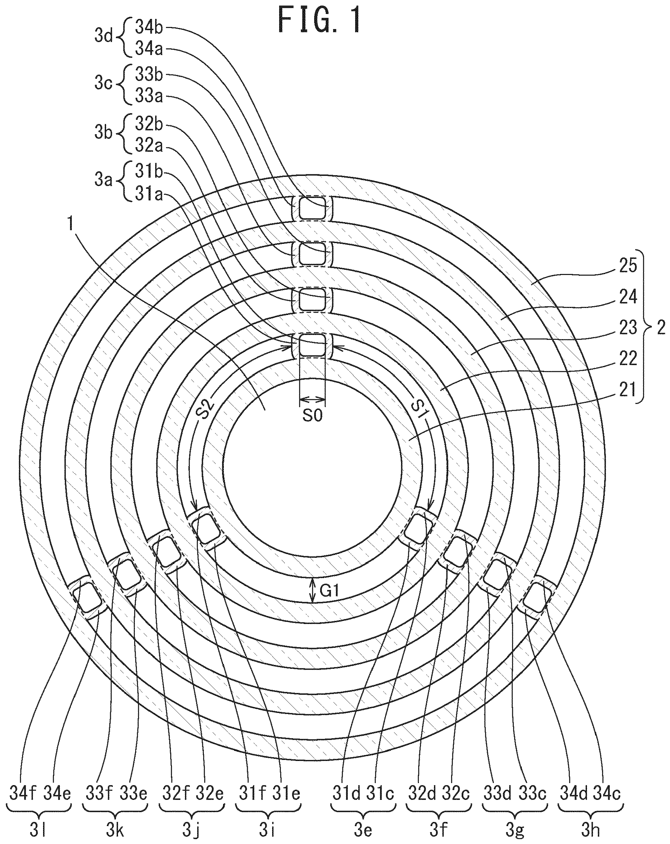

The optical fiber according to the first embodiment of the present invention is the Bragg air core fiber that includes, as illustrated in FIG. 1, a tubular core guide tube 21 that defines a core (hole core) 1 inside and extends in the longitudinal direction of the optical fiber, and a multi-layer cladding portion 2 that is arranged in multiple layers to configure a periodic structure by sandwiching a plurality of air layers (air cladding) around the core guide tube 21 and extends in the longitudinal direction of the optical fiber.

The multi-layer cladding portion 2 includes tubular layers 22 to 25 made of a plurality of dielectrics periodically and concentrically arranged by alternately sandwiching the air layer around the core guide tube 21 and forms the Bragg type reflection structure. The air layer is defined between the core guide tube 21 and a tubular layer 22, between the tubular layer 22 and a tubular layer 23, between the tubular layer 23 and a tubular layer 24, and between the tubular layer 24 and a tubular layer 25 respectively to configure the periodic structure. A spacing between the core guide tube 21 and the tubular layer 22, a spacing between the tubular layer 22 and the tubular layer 23, a spacing between the tubular layer 23 and the tubular layer 24, and a spacing between the tubular layer 24 and the tubular layer 25 are determined by considering the conditions of the Bragg reflection (Bragg diffraction) with respect to the wavelength of the light transmitted through the core 1 of the optical fiber.

As materials of the core guide tube 21 and the tubular layers 22 to 25, for example, the dielectric such as the quartz glass (silica glass) or the dopant-doped quartz glass are usable. The core guide tube 21 and the tubular layers 22 to 25 may be configured from the same material or may be configured from different materials as long as optically the Bragg type periodic structure can be realized.

In the optical fiber according to the first embodiment of the present invention, support members 3a to 31 are provided to each air layer between the core guide tube 21 and the tubular layers 22 to 25 along the longitudinal direction of the optical fiber. More specifically, a plurality of support members 3a, 3e, and 3i are provided to the air layer between the core guide tube 21 and the tubular layer 22 in a manner to connect the core guide tube 21 with the tubular layer 22. A plurality of support members 3b, 3f, and 3j are provided to the air layer between the tubular layer 22 and the tubular layer 23 in a manner to connect the tubular layer 22 with the tubular layer 23. A plurality of support members 3c, 3g, and 3k are provided to the air layer between the tubular layer 23 and the tubular layer 24 in a manner to connect the tubular layer 23 with the tubular layer 24. A plurality of support members 3d, 3h, and 31 are provided to the air layer between the tubular layer 24 and the tubular layer 25 in a manner to connect the tubular layer 24 with the tubular layer 25.

A support member 3a is configured from two support plates (support walls) 31a and 31b that form a wall-like (plate-like) pair and extend parallel to each other along the longitudinal direction of the optical fiber. A level of a member inner wall spacing S0 defined at the inside of a support plate 31a and a support plate 31b paired with each other is about the same as a thickness G1 of the air layer between the core guide tube 21 and the tubular layer 22 and is at least narrower than the double thickness G1 of the air layer between the core guide tube 21 and the tubular layer 22. A support member 3b is configured from two support plates 32a and 32b that form a wall-like pair and extend parallel to each other along the longitudinal direction of the optical fiber. A level of a member inner wall spacing of a pair of support plates 32a and 32b is about the same as the thickness of the air layer between the tubular layer 22 and the tubular layer 23 and is at least narrower than the double thickness of the air layer between the tubular layer 22 and the tubular layer 23.

A support member 3c is configured from two support plates 33a and 33b that form a wall-like pair and extend parallel to each other along the longitudinal direction of the optical fiber. A member inner wall spacing of a pair of support plates 33a and 33b is about the same as the thickness of the air layer between the tubular layer 23 and the tubular layer 24 and is at least narrower than the double thickness of the air layer between the tubular layer 23 and the tubular layer 24. A support member 3d is configured from two support plates 34a and 34b that form a wall-like pair and extend parallel to each other along the longitudinal direction of the optical fiber. A level of a member inner wall spacing of a pair of support plates 34a and 34b is about the same as the thickness of the air layer between the tubular layer 24 and the tubular layer 25 and is at least narrower than the double thickness of the air layer between the tubular layer 24 and the tubular layer 25.

A support member 3e is configured from two support plates 31c and 31d that form a wall-like pair and extend parallel to each other along the longitudinal direction of the optical fiber. A level of a member inner wall spacing of a pair of support plates 31c and 31d is about the same as the thickness G1 of the air layer between the core guide tube 21 and the tubular layer 22 and is at least narrower than the double thickness G1 of the air layer between the core guide tube 21 and the tubular layer 22. A support member 3f is configured from two support plates 32c and 32d that form a wall-like pair and extend parallel to each other along the longitudinal direction of the optical fiber. A level of a member inner wall spacing of a pair of support plates 32c and 32d is about the same as the thickness of the air layer between the tubular layer 22 and the tubular layer 23 and is at least narrower than the double thickness of the air layer between the tubular layer 22 and the tubular layer 23.

A support member 3g is configured from two support plates 33c and 33d that form a wall-like pair and extend parallel to each other along the longitudinal direction of the optical fiber. A level of a member inner wall spacing of a pair of support plates 33c and 33d is about the same as the thickness of the air layer and is at least narrower than the double thickness of the air layer. A support member 3h is configured from two support plates 34c and 34d that form a wall-like pair and extend parallel to each other along the longitudinal direction of the optical fiber. A level of a member inner wall spacing of a pair of support plates 34c and 34d is about the same as the thickness of the air layer and is at least narrower than the double thickness of the air layer.

A support member 3i is configured from two support plates 31e and 31f that form a wall-like pair and extend parallel to each other along the longitudinal direction of the optical fiber. A level of a member inner wall spacing of a pair of support plates 31e and 31f is about the same as the thickness G1 of the air layer between the core guide tube 21 and the tubular layer 22 and is at least narrower than the double thickness G1 of the air layer between the core guide tube 21 and the tubular layer 22. A support member 3j is configured from two support plates 32e and 32f that form a wall-like pair and extend parallel to each other along the longitudinal direction of the optical fiber. A level of a member inner wall spacing of a pair of support plates 32e and 32f is about the same as the thickness of the air layer between the tubular layer 22 and the tubular layer 23 and is at least narrower than the double thickness of the air layer between the tubular layer 22 and the tubular layer 23.

A support member 3k is configured from two support plates 33e and 33f that form a wall-like pair and extend parallel to each other along the longitudinal direction of the optical fiber. A level of a member inner wall spacing of a pair of support plates 33e and 33f is about the same as the thickness of the air layer between the tubular layer 23 and the tubular layer 24 and is at least narrower than the double thickness of the air layer between the tubular layer 23 and the tubular layer 24. A support member 31 is configured from two support plates 34e and 34f that form a wall-like pair and extend parallel to each other along the longitudinal direction of the optical fiber. A level of a member inner wall spacing of a pair of support plates 34e and 34f is about the same as the thickness of the air layer between the tubular layer 24 and the tubular layer 25 and is at least narrower than the double thickness of the air layer between the tubular layer 24 and the tubular layer 25.

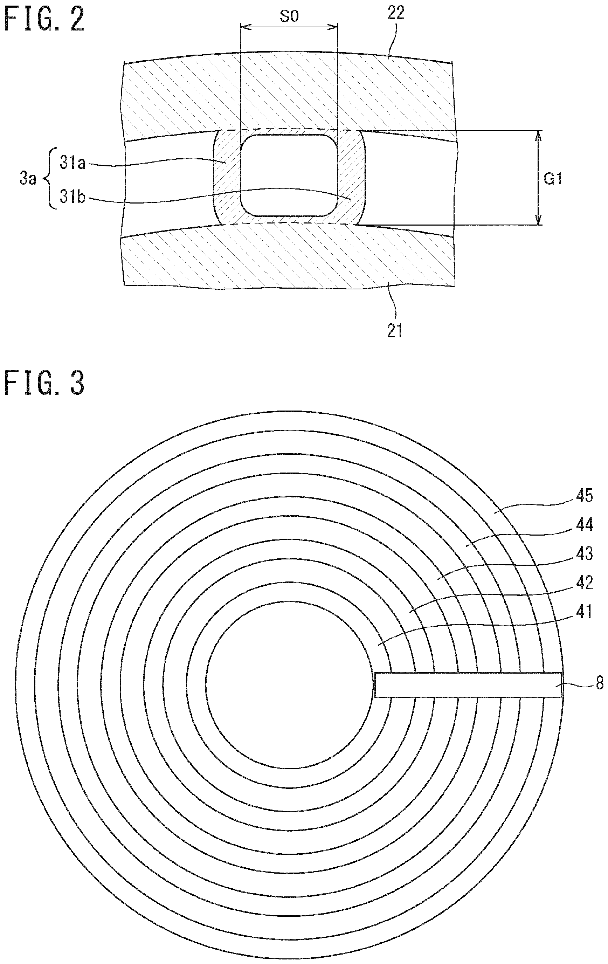

As described later, when, for example, the optical fiber is drawn, from the capillary made of the glass tube or the like, per one, the support members 3a to 31 can form two wall-like support plates 31a.31b: 31c, 31d; 31e, 31f; 32a.32b: 32c, 32d; 32e, 32f; 33a.33b: 33c, 33d; 33e,33f; 34a.34b: 34c, 34d; 34e, 34f opposed to each other in the mirror image relationship. For example, when the support member 3a is formed from the capillary, as illustrated in FIG. 2, the wall-like support plate 31a and the support plate 31b form a pair (set) of the member inner wall spacing S0 that is spaced apart in the order of the diameter of the capillary, and the member inner wall spacing S0 is about the same as the thickness G1 of the air layer. Other support members 3b to 31 illustrated in FIG. 1 also have the structure similar to that of the support member 3a illustrated in FIG. 2. Therefore, to form the support members 3a to 31, if the identical capillary is used, pairs of support plates 31a to 31f, 32a to 32f, 33a to 33f, and 34a to 34f separated by the common member inner wall spacing are formed.

The support plates 31a to 31f, 32a to 32f, 33a to 33f, and 34a to 34f of the support members 3a to 31, in a cross-sectional view perpendicular to the longitudinal direction of the optical fiber, have the plate-like (strip-like) shape close to the elongated rectangular (rod-like) shape. Although FIG. 1 schematically exemplifies a case where the support plates 31a to 31f, 32a to 32f, 33a to 33f, and 34a to 34f use the cylindrical capillary as the raw material and a case where the support plates 31a to 31f, 32a to 32f, 33a to 33f, and 34a to 34f are shaped to be bent to the outside of each pair, the cross-sectional shapes perpendicular to the longitudinal direction of the optical fiber of the support plates 31a to 31f, 32a to 32f, 33a to 33f, and 34a to 34f are not limited thereto. The cross-sectional shapes perpendicular to the longitudinal direction of the optical fiber of the support plates 31a to 31f, 32a to 32f, 33a to 33f, and 34a to 34f may be, for example, substantially linear and may be appropriately controlled depending on the type or the like of the capillary.

As the materials of the support members 3a to 31, the glass and the polymer such as the quartz glass may be used. The support members 3a to 31 are preferably configured from the material that is the same as that of the core guide tube 21 and the tubular layers 22 to 25. In particular, it is preferable, in terms of production, that the viscosity of the material configuring the support members 3a to 31 is similar to the viscosity of the material configuring the core guide tube 21 and the tubular layers 22 to 25. More specifically, if the materials of the support members 3a to 31, the core guide tube 21 and the tubular layers 22 to 25, or the viscosity characteristics of these materials are the same, since the materials respectively configuring the support members 3a to 31, the core guide tube 21 and the tubular layers 22 to 25 indicate the same characteristics for the thermal process such as drawing, it becomes more easily to control the shape or the like of the support members 3a to 31. The support members 3a to 31 may be configured from materials different from those of the core guide tube 21 and the tubular layers 22 to 25. Further, the support members 3a to 31 may be made from different materials.

In the cross-sectional view of the longitudinal direction of the optical fiber, the distance (foreign spacing) between the support members 3a to 31 in the circumferential direction of the optical fiber is wider than the double thickness of the air layer in which the support members 3a to 31 are arranged. The distance between the support members is the spacing between the support members defined along the circumferential direction of the optical fiber of the support members 3a to 31, and when there is one support members 3a to 31, the distance means the spacing between the side faces of a single support member. For example, when the support member 3a is focused, the distance between the support member 3a and the support member 3e spaced apart in the circumferential direction by about 120 degrees clockwise from the support member 3a in the circumferential direction of the optical fiber (foreign spacing) S1 is wider than the double thickness (air gap) G1 of the air layer between the core guide tube 21 and the tubular layer 22 sandwiching the support member 3a. Further, the distance (foreign spacing) S2 between the support member 3a, and the support member 3i that is spaced apart in the circumferential direction by about 120 degrees counterclockwise from the support member 3a in the circumferential direction of the optical fiber is wider than the double thickness (air gap) G1 of the air layer between the core guide tube 21 and the tubular layer 22 sandwiching the support member 3a. When, other support members 3b to 31 are focused also, the relationship is set to that similar to the relationship between the distances between the support members S1 and S2, and the air gap G1 when the support member 3a is focused.

When the support member 3a is focused, as illustrated in FIG. 1, the spacing (member inner wall spacing) S0 between a pair of support plates 34a and 34b of the support member 3a is narrower than the distances between the support members S1 and S2 of the support members 3a, 3e, and 3i. In other words, the intra space (member inner wall spacing) S0 defined within a pair that is a side adjacent to a pair of support plates 34a and 34b of the support member 3a is narrower than the inter-space (distance between the support members) S1 and S2 between the support members defined along the circumferential direction of the optical fiber at the outside of the pair that is the opposite side from the adjacent side of support plates 34a and 34b. Therefore, the intra space (member inner wall spacing) S0 inside the support member 3a is the distance smaller than the double thickness (air gap) G1 of the air layer. As illustrated in FIG. 2, the member inner wall spacing S0 is defined as a distance between a support plate 34a and a support plate 34b both are in the mirror image relationship. When other support members 3b to 31 are focused, the relationship is set to that similar to the relationship among the spacings S0, S1, and S2 when the support member 3a is focused.

The thickness in the circumferential direction of the optical fiber (circumferential direction in which center of core 1 is center of circle) of the support plates 31a to 31f, 32a to 32f, 33a to 33f, and 34a to 34f of the support members 3a to 31 is preferably the thickness in which the mode of the light transmitted through the core 1 may not be localized. Since the plate thickness (wall thickness) of the support plates 31a to 31f, 32a to 32f, 33a to 33f, and 34a to 34f in the circumferential direction of the optical fiber depends on the wavelength of the light transmitted through the core 1, for example, when the wavelength of the light to be used is 1µm, it is preferable to set the plate thickness of the support plates 31a to 31f, 32a to 32f, 33a to 33f, and 34a to 34f in the circumferential direction of the optical fiber to less than 1µm, that is shorter than the wavelength.

The plate thickness of the support plates 31a to 31f, 32a to 32f, 33a to 33f, and 34a to 34f of the support members 3a to 31 in the circumferential direction of the optical fiber is the thickness in which the mode corresponding to the wavelength of the light transmitted through the core 1 may not be localized, or as a specific example, the plate thickness of the support plates 31a to 31f, 32a to 32f, 33a to 33f, and 34a to 34f is thinner than the wavelength of the light transmitted through the core 1, and accordingly, the leakage of the light to the outside through the support plates 31a to 31f, 32a to 32f, 33a to 33f, and 34a to 34f can be prevented, and it is possible to suppress the loss of the light transmitted through the core 1.

FIG. 1 exemplifies a case where three support members 3a to 31 are arranged to each air layer configuring the multi-layer cladding portion 2, but the number of support members to be distributed for each air layer present in the different radial positions is not particularly limited. Although the number of support members arranged to each air layer is preferably as small as possible from the viewpoint of the transmission characteristics, from the viewpoint of the mechanical strength and the stability of the structure, the number is, for example, preferably three or more. Further, although FIG. 1 exemplifies a case where the support members 3a to 31 are arranged at regular intervals of about 120 degrees, the support members 3a to 31 may be arranged at the different distance between the support members.

In FIG. 1, the support members 3a to 3d arranged to the air layer at the different radial positions configuring the multi-layer cladding portion 2 are arranged on the straight line along the same radial direction. The support members 3e to 3h arranged at the air layer at the different radial positions are arranged on the straight line along the same radial direction. The support members 3i to 31 arranged to the air layer at the different radial positions are arranged on the straight line along the same radial direction. The support members 3a to 3d, the support members 3e to 3h, and the support members 3e to 3h arranged at the air layer at the different radial positions may be arranged to include the individual position of a plurality of air layers, i.e., the different radial direction.

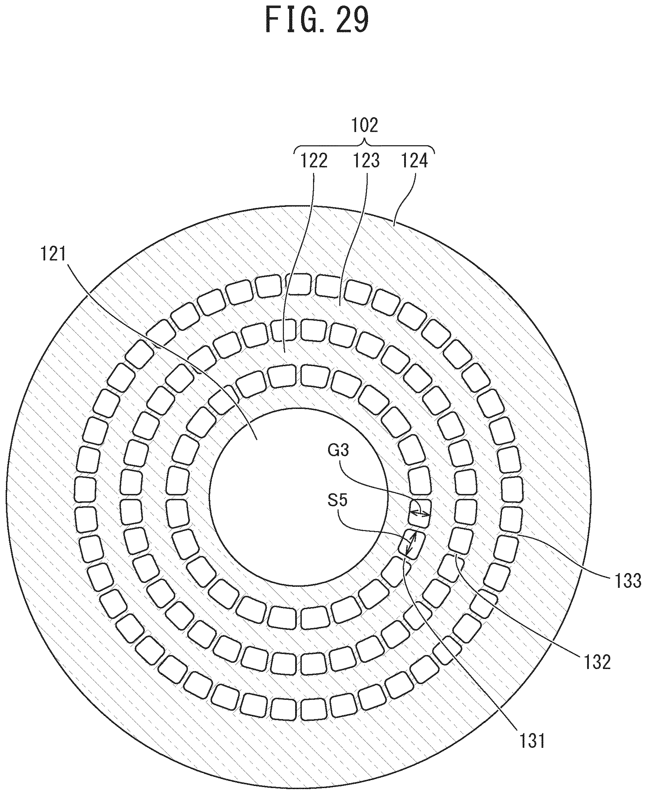

The optical fiber according to the first and second comparative examples is described. The optical fiber according to the first comparative example is, as illustrated in FIG. 29, the air core fiber that includes a tubular core guide tube 121 that defines the core (hole core) 101 at inside and a multilayer clad portion 102 arranged around a core guide tube 121. The multilayer clad portion 102 includes a plurality of tubular layers 122 to 124 sandwiching the air layer.

Although a plurality of wall-shaped support plates 131, 132, and 133 are arranged between the core guide tube 121 and the tubular layer 122, between tubular layers 122 and 123, and between tubular layers 123 and 124 along the longitudinal direction of the optical fiber, each of the support plates 131, 132, and 133 is arranged at regular intervals along the circumferential direction of the optical fiber, and a feature that the thickness of each of the support plates 131, 132, and 133 is thicker than the plate thickness of the support plates 31a to 31f, 32a to 32f, 33a to 33f, and 34a to 34f illustrated in FIG. 2 is different from the feature of the optical fiber according to the first embodiment of the present invention illustrated in FIG. 2.

When the optical fiber according to the first comparative example is produced, based on the stack-and-draw method, the tubular member configuring the core guide tube 121 and the tubular layers 122, 123, and 124 and a large number of capillaries configuring a plurality of support plates 131, 132, and 133 are sequentially laminated. A large number of capillaries are arrayed without gaps between the tubular members in a circumferential direction of the optical fiber. The contact portion of the adjacent capillaries during fiber drawing and a part of the tubular member sandwiching the capillary are coupled and a large number of support plates 131, 132, and 133 that are equal in number to the capillaries are formed at regular intervals.

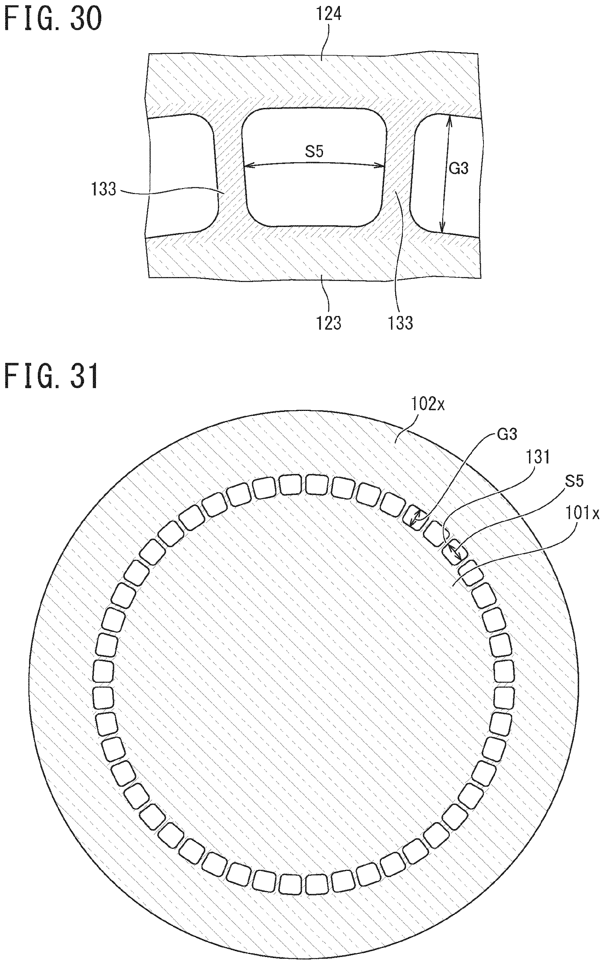

Therefore, in the optical fiber according to the first comparative example, as illustrated in FIGS. 29 and 30, the distance between the support members S5 in the circumferential direction of the optical fiber of the support plates 131, 132, and 133 formed from a large number of capillaries is about the same as the thickness G3 of the air layer in which the support plates 131, 132, and 133 are arranged and is at least narrower than the double thickness G3, and the degradation in the transmission characteristics is caused due to a large number of support plates 131, 132, and 133. Since the walls of the adjacent capillaries are coupled, the thickness of the wall is double the thickness of the support plates 31a to 31f, 32a to 32f, 33a to 33f, and 34a to 34f of the optical fiber according to the first embodiment of the present invention. Considering the wavelength of the light, the light leakage easily occurs through a large number of support plates 131, 132, and 133, the variation in the effective dielectric constant becomes large, and these lead to the degradation in the transmission characteristics.

Next, the optical fiber according to the second comparative example is, as illustrated in FIG. 31, the air clad fiber that includes a core 101x having a solid structure and a tubular layer 102x arranged around the core 101x. A feature that a large number of (for example, 48) support plates 131 are arranged between the core 101x and the tubular layer 102x at regular intervals along the circumferential direction of the optical fiber is different from the feature of the optical fiber according to the first embodiment of the present invention illustrated in FIG. 2.

The method for producing the optical fiber according to the second comparative example is similar to the method for producing the optical fiber according to the first comparative example. Therefore, in the optical fiber according to the second comparative example also, the distance between the support members S5 in the circumferential direction of the optical fiber of the support plate 131 is about the same as the thickness G3 of the air layer in which the support plate 131 is arranged and is at least narrower than the double thickness G3, and due to a large number of support plates 131, the degradation in the transmission characteristics is caused. Further, the plate thickness of a large number of support plates 131 is the double thickness of the support plates 31a to 31f, 32a to 32f, 33a to 33f, and 34a to 34f of the optical fiber according to the first embodiment of the present invention. By thickening of the plate thickness by about two times, considering the wavelength of the light, the light leakage easily occurs through a large number of support plates 131, the variation in the effective dielectric constant becomes large, and accordingly, the degradation in the transmission characteristics is caused by being deviated from the ideal structure.

On the other hand, in the optical fiber according to the first embodiment of the present invention, as illustrated in FIG. 1, the support members 3a to 31 are spaced apart from one another, and the distance between the support members (foreign spacing) in the circumferential direction of the optical fiber of the support members 3a to 31 is wider than the double thickness of the air layer in which the support members 3a to 31 are arranged. The number of the support plates 31a to 31f, 32a to 32f, 33a to 33f, and 34a to 34f of the support members 3a to 31 may be reduced. Accordingly, the light leakage from the support plates 31a to 31f, 32a to 32f, 33a to 33f, and 34a to 34f of the support members 3a to 31 is suppressed and the degradation in the transmission characteristics due to the support plates 31a to 31f, 32a to 32f, 33a to 33f, and 34a to 34f of the support members 3a to 31 may be suppressed.

The plate thickness and the shape of the support plates 31a to 31f, 32a to 32f, 33a to 33f, and 34a to 34f of the support members 3a to 31 are highly influential to the characteristics. For this reason, it is important to reduce the plate thickness of the support plates 31a to 31f, 32a to 32f, 33a to 33f, and 34a to 34f, to linearize them, and to control the structure. However, in a producing process of the optical fiber according to the first and second comparative examples illustrated in FIGS. 29 to 31, by closely packing and arraying capillaries, contact portions of the adjacent capillaries are coupled during fiber drawing and one support plate is formed. For this reason, in addition that the plate thickness becomes double the thickness, a structural distortion or the like is likely to occur, and it is difficult to control the thickness and the shape of the support plate.

On the other hand, in the optical fiber according to the first embodiment of the present invention, the distance between the support members of the support members 3a to 31 in the circumferential direction of the optical fiber is wider than the double thickness of the air layer in which the support members 3a to 31 are arranged, and accordingly, pairs of the support plates 31a to 31f, 32a to 32f, 33a to 33f, and 34a to 34f are individually formed from one capillary. Therefore, compared with the first and second comparative examples, the thin plate thickness can be easily realized and also the plate thickness and the shape of the support plates 31a to 31f, 32a to 32f, 33a to 33f, and 34a to 34f become easy to control.

### <Method for Producing Optical Fiber>

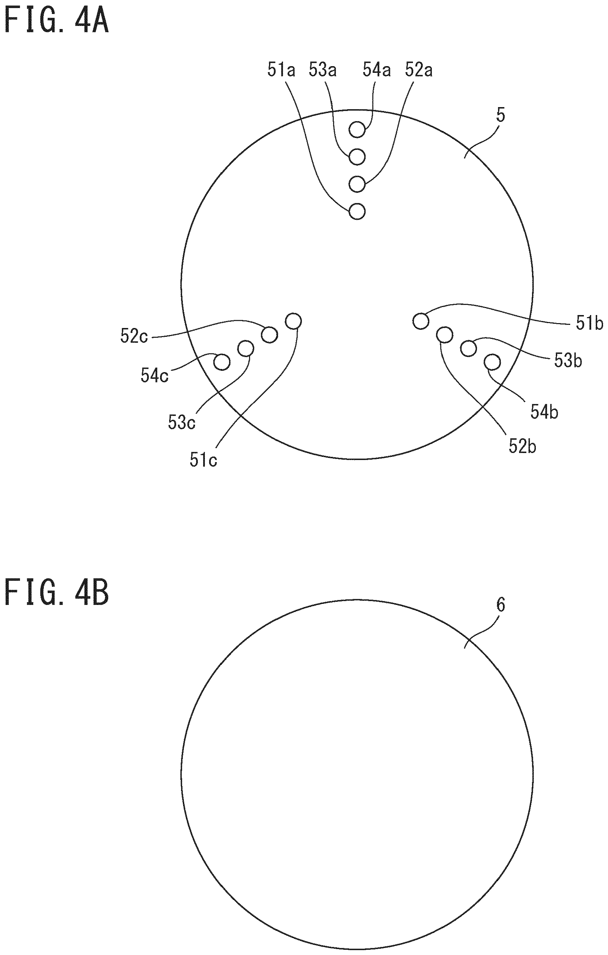

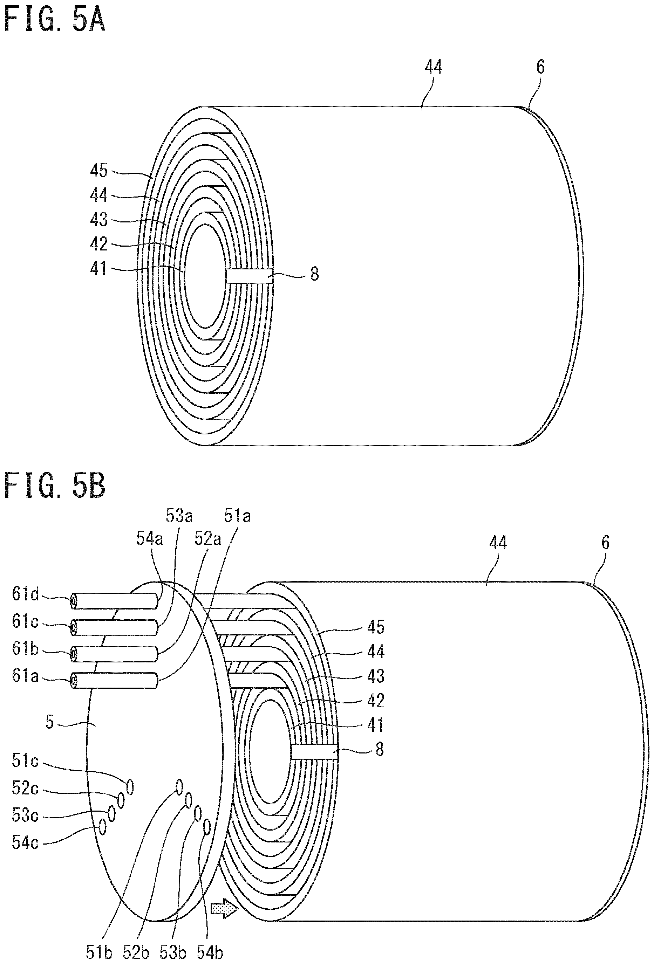

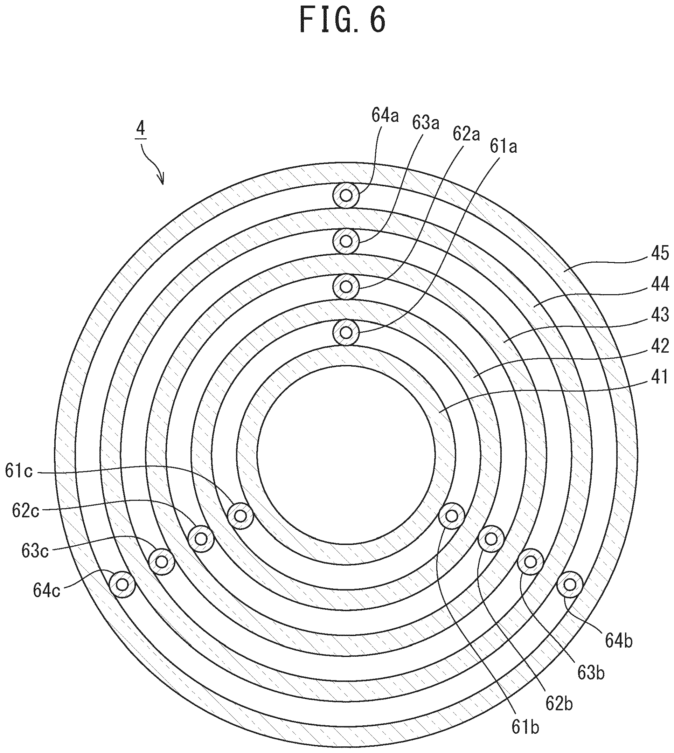

Next, with reference to FIGS. 3 to 6, one example of the method for producing the optical fiber according to the first embodiment of the present invention is described. The method for producing the optical fiber described below is merely an example and can be realized by various other producing methods as long as it is within the scope of the gist described in claims.
(a) First, as illustrated in FIG. 3, a tubular core base material 41 made of the quartz or the like having the hole of the appropriate dimension and a plurality of tubular layer base material layers 42 to 45 are concentrically arranged and periodically spaced apart. End portions of a core base material 41 and the tubular layer base material layers 42 to 45 are temporary joint with a tape 8, and the air gap between the core base material 41 and the tubular layer base material layers 42 to 45 is maintained. The adhesive or the like may be used instead of the tape 8.
(b) The top plate (round plate) 5 made of the quartz glass or the like as illustrated in FIG. 4A is prepared. The apertures (holes) 51a to 51c, 52a to 52c, 53a to 53c, and 54a to 54c are hollowed out at the respective positions where a plurality of capillaries are passed of a top plate 5 using a drill or the like. Further, a bottom plate (round plate) 6 that opposes the top plate 5 as illustrated in FIG. 4B is separately prepared. To the bottom plate 6 also, apertures corresponding to the apertures 51a to 51c, 52a to 52c, 53a to 53c, and 54a to 54c of the top plate 5 may be provided. As illustrated in FIG. 5A, one end of the temporary joint core base material 41 and a plurality of tubular layer base material layers 42 to 45 contacts with the bottom plate 6 and the temporary fixation is performed by the heating or the like.
(c) Next, as illustrated in FIG. 5B, a plurality of (12) capillaries (support base material part) 61a to 61d, 62a to 62d, and 63a to 63d (in FIG. 5B, capillaries 62a to 62d, and 63a to 63d are not illustrated, see FIG. 6) are passed through the apertures (holes) 51a to 51c, 52a to 52c, 53a to 53c, and 54a to 54c of the top plate 5 and capillaries 61a to 61d, 62a to 62d, and 63a to 63d are inserted between the core base material 41 and the plurality of tubular layer base material layers 42 to 45 while aligning them. The capillaries 61a to 61d, 62a to 62d, and 63a to 63d are fused and connected to the inner surface or the outer surface of the core base material 41 and the plurality of tubular layer base material layers 42 to 45 by adding the heat or the like. As a result, as illustrated in the cross section of FIG. 6, a fiber base material 4 is obtained in which between the core base material 41 and the tubular layer base material layers 42 to 45, a plurality of capillaries 61a to 61d, 62a to 62d, and 63a to 63d are integrated and fixed so as to be spaced apart from each other in the circumferential direction.
(d) Thereafter, the drawing of heating and stretching the fiber base material 4 is conducted. In the drawing, the fiber base material 4 is melted and drawn such that the core base material 41 is the core guide tube 21 and the tubular layer base material layers 42 to 45 are the tubular layers 22 to 25. When the core is a solid core made of the glass or the like, a cylindrical core base material for forming the core is prepared, and the drawing is performed such that the cylindrical core base material is the core. During the drawing of the fiber base material 4, capillaries 61a, 62a, and 63a are deformed, and a molten state of a part of the outer surface of the core base material 41 and a part of the inner surface of the tubular layer base material layer 42 that sandwich the capillaries 61a, 62a, and 63a progresses, so that the capillaries 61a, 62a, and 63a are respectively drawn and thinned. More specifically, the walls of the capillaries 61a, 62a, and 63a are drawn to form a pair of support plates 31a and 31b of the support member 3a, a pair of support plates 31c and 31d of the support member 3e, and a pair of support plates 31e and 31f of the support member 3i.

As illustrated in FIG. 1, when the support member 3a is focused, the distance between the support members S1 and S2 of the support member 3a, 3e, and 3i in the circumferential direction of the optical fiber is wider than the double thickness (air gap) G1 of the air layer in which the support member 3a is arranged. When the support members 3e and 3i are focused also, the distance is set as similar to the relationship between the distances between the support members S1 and S2 and the air gap G1 when the support member 3a is focused.

Similarly, the capillaries 61b, 62b, and 63b are deformed and the molten state with the tubular layer base material layers 42 and 43 progresses so that the drawing is performed such that the walls of the capillaries 61b, 62b, and 63b are the support plates 32a to 32f paired with each other of the support members 3b, 3f, and 3j. Further, capillaries 61c, 62c, and 63c are deformed and the molten state with tubular layer base material layers 43 and 44 progresses so that the drawing is performed such that the walls of the capillaries 61c, 62c, and 63c are support plates 33a to 33f paired with each other of the support members 3c ,3g, and 3k. Capillaries 61d, 62d, and 63d are deformed and the molten state with tubular layer base material layers 44 and 45 progresses so that the drawing is performed such that the walls of capillaries 61d, 62d, and 63d are support plates 34a to 34f paired with each other of support members 3d, 3h, and 31. In this way, the optical fiber illustrated in FIG. 1 is completed.

Although the case where the capillaries 61a to 61d, 62a to 62d, and 63a to 63d are cylindrical is exemplified, the present invention is not limited to this. For example, the hole shape and the outer shape of the capillaries 61a to 61d, 62a to 62d, and 63a to 63d may be elliptical or polygonal such as square or hexagonal. Further, the number of capillaries 61a to 61d, 62a to 62d, and 63a to 63d is not limited.

In the method for producing the optical fiber according to the first embodiment of the present invention, a plurality of capillaries (support base material part) 61a to 61d, 62a to 62d, and 63a to 63d are arranged so as to be spaced apart in the circumferential direction and the support members 3a to 31 are formed such that the distance between the support members of the support members 3a to 31 in the circumferential direction of the optical fiber is wider than the double thickness of the air layer in which the support members 3a to 31 are arranged. Accordingly, compared with the first and second comparative examples, the number of the support members 3a to 31 can be reduced and the optical fiber that can suppress the degradation in the transmission characteristics caused by the support members 3a to 31 can be realized.

From one capillary, a pair of wall-like support plates 31a to 31f, 32a to 32f, 33a to 33f, and 34a to 34f having the mirror image relationship is separately formed. Accordingly, compared with the first and second comparative examples, since the thickness of the support plates 31a to 31f, 32a to 32f, 33a to 33f, and 34a to 34f can be smaller, the light leakage via the support plates 31a to 31f, 32a to 32f, 33a to 33f, and 34a to 34f can be reduced.

### <First Variation>

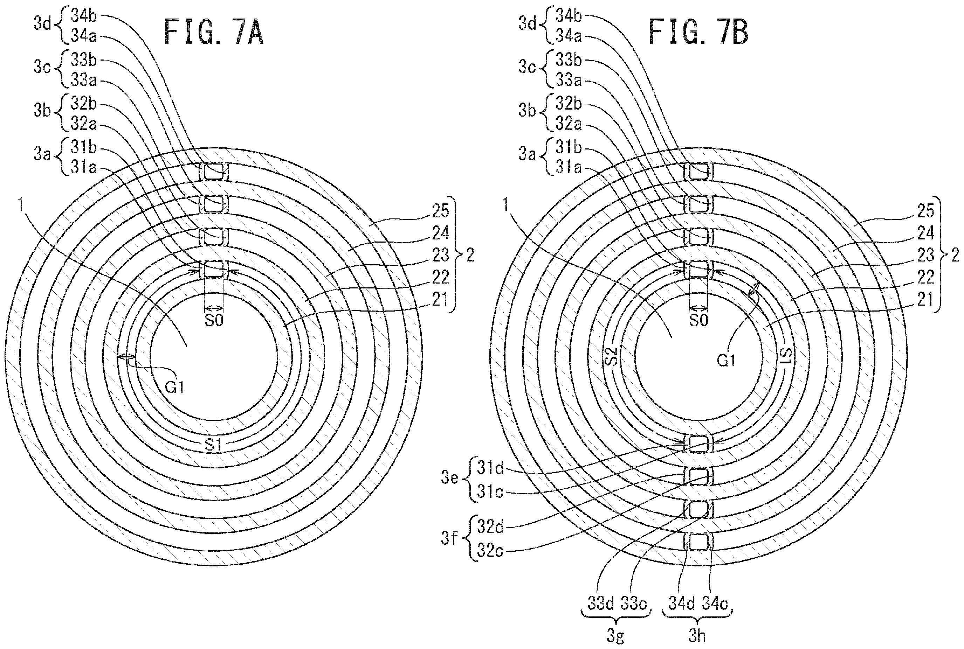

As the optical fiber according to the first variation of the first embodiment of the present invention, the case where the number of support members arranged to each air layer is different from the number of the optical fibers according to the first embodiment of the present invention is described. For example, as illustrated in FIG. 7A, the support member 3a, the support member 3b, the support member 3c, and the support member 3d may be arranged one by one to each air layer from an inner air layer. For example, when the support member 3a is focused, the support members 3a in the circumferential direction of the optical fiber, i.e., a distance between the support members S1 of side faces of the support member 3a is wider than the double thickness G1 of the air layer in which the support member 3a is arranged.

As illustrated in FIG. 7B, two support members 3a and 3e, support members 3b and 3f, support members 3c and 3g, and support members 3d and 3h may be arranged to each air layer from the inner air layer. For example, when the support member 3a is focused, the distances between the support members S1 and S2 of the support members 3a and 3b in the circumferential direction of the optical fiber is wider than the double thickness G1 of the air layer in which the support member 3a is arranged.

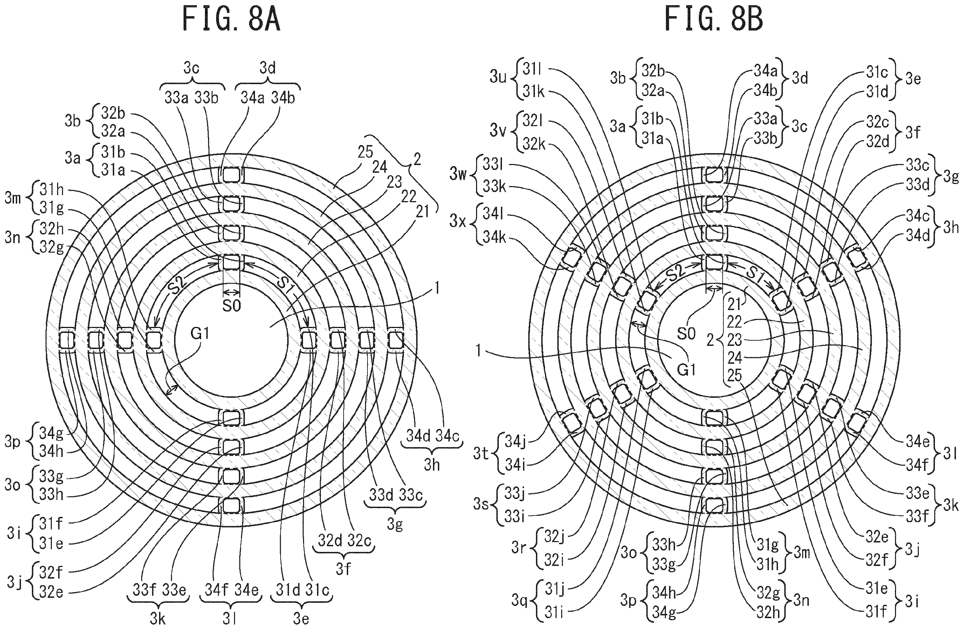

As illustrated in FIG. 8A, four support members 3a, 3e, 3i, and 3m, support members 3b, 3f, 3j, and 3n, support members 3c ,3g, 3k, and 3o, and support members 3d, 3h, 31, and 3p may be arranged to each air layer from the inner air layer. A support member 3m is configured from support plates 31g and 31h that form a wall-like pair. A support member 3n is configured from support plates 32g and 32h that form a wall-like pair. A support member 3o is configured from support plates 33g and 33h that form a wall-like pair. A support member 3p is configured from support plates 34g and 34h that form a wall-like pair.

As illustrated in FIG. 8B, six support members 3a, 3e, 3i, 3m, 3q, and 3u, support members 3b, 3f, 3j, 3n, 3r, and 3v, support members 3c ,3g, 3k, 3o, 3t, and 3w, support members 3d, 3h, 31, 3p, 3t, and 3x may be arranged to each air layer. A support member 3q is configured from support plates 31i and 31j that form a wall-like pair. A support member 3r is configured from support plates 32i and 32j that form a wall-like pair. A support member 3s is configured from support plates 33i and 33j that form a wall-like pair. A support member 3t is configured from support plates 34i and 34j that form a wall-like pair. A support member 3u is configured from support plates 31k and 311 that form a wall-like pair. A support member 3v is configured from support plates 32k and 321 that form a wall-like pair. A support member 3w is configured from support plates 33k and 331 that form a wall-like pair. A support member 3x is configured from support plates 34k and 341 that form a wall-like pair.

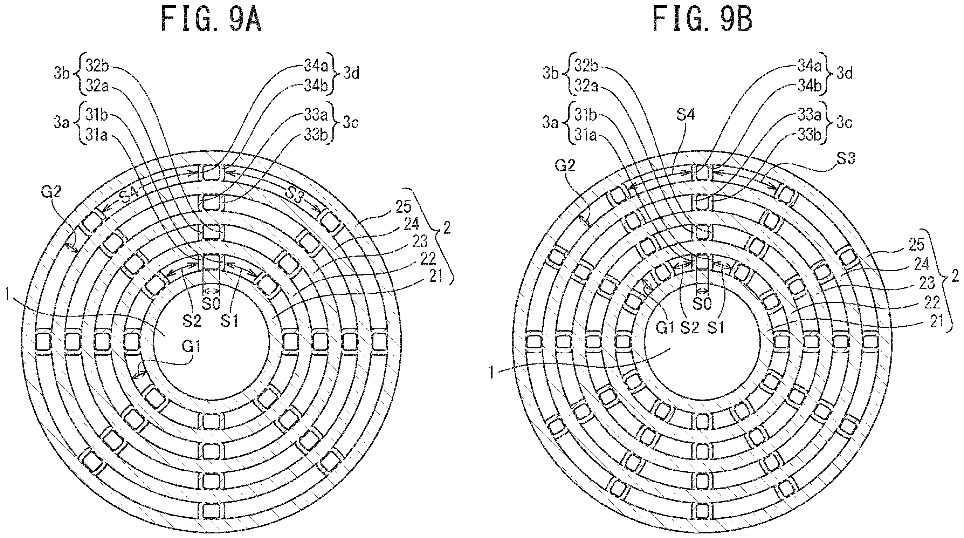

As illustrated in FIG. 9A, in addition to the support members 3a to 3d, eight support members whose reference numerals are omitted may be arranged to each air layer. In FIG. 9A, when the support member 3a arranged to the innermost air layer is focused, although the distance between the support members (foreign spacing) S1 and S2 of the support member 3a in the circumferential direction of the optical fiber is about the same as the double thickness (air gap) G1 of the air layer in which the support member 3a is arranged, the distance between the support members (foreign spacing) S1 and S2 is wider than the member inner wall spacing S0 of the support member 3a. On the other hand, when the support member 3d arranged to the outermost air layer is focused, the distance between the support members (foreign spacing) S3 and S4 of the support member 3d in the circumferential direction of the optical fiber is wider than the double thickness (air gap) G2 of the air layer in which the support member 3d is arranged.

According to the first variation of the first embodiment of the present invention, in at least one or more layers out of each air layer along the radial direction, the distance between the support members S3 and S4 of the support member 3d in the circumferential direction of the optical fiber may be wider than the double thickness (air gap) G2 of the air layer in which the support member 3d is arranged and even in the case of the air layer in which foreign spacings S1 and S2 are narrower than the double thickness G1 of the air layer, the foreign spacing S1 and S2 may be wider than the member inner wall spacing S0. More specifically, even if in all air layers, a condition that the distance is longer than the double thickness of the air layer is not achieved, the most disadvantageous air layer, for example, the member inner wall spacing defined on the adjacent side of the support members arranged in the innermost air layer may be narrower than the foreign spacing defined on the opposite side from the adjacent side of the support member arranged to the innermost air layer.

As illustrated in FIG. 9B, in addition to the support members 3a to 3d, twelve support members whose reference numerals are omitted may be arranged to each air layer. In FIG. 9B, when the support member 3a arranged to the innermost air layer is focused, the distances between the support members S1 and S2 of the support member 3a in the circumferential direction of the optical fiber is about the same as the thickness (air gap) G1 of the air layer in which the support member 3a is arranged. On the other hand, when the outermost support member 3d is focused, the distance between the support members S3 and S4 of the support member 3d in the circumferential direction of the optical fiber is wider than the double thickness (air gap) G2 of the air layer in which the support member 3d is arranged. The number of support members arranged to each air layer may be other than the number described here.

### <Second Variation>

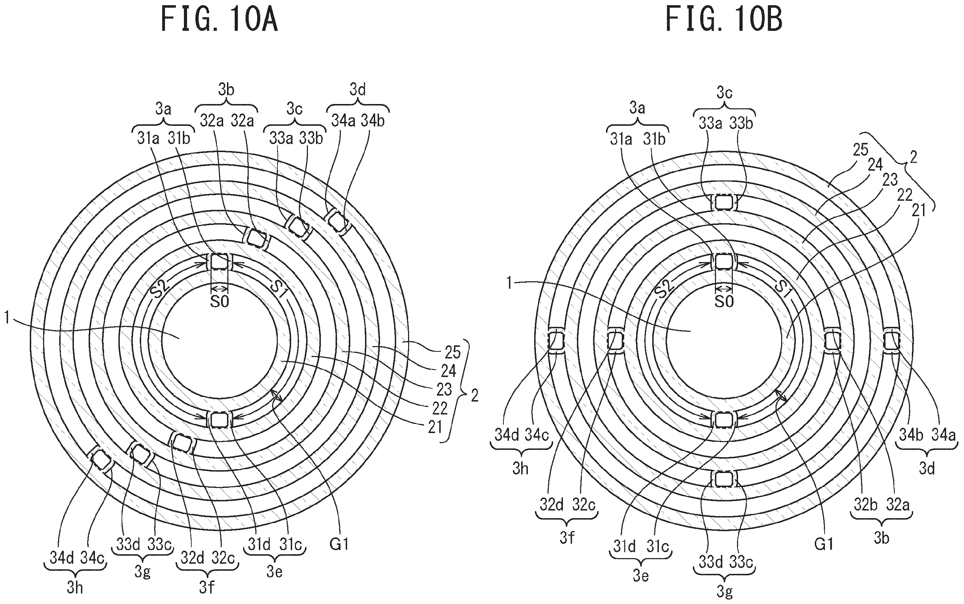

As the optical fiber according to the second variation of the first embodiment of the present invention, the support members arranged to each air layer may be arranged to include an individual position of each air layer, i.e., the different radial direction. For example, as illustrated in FIG. 10A, two support members 3a and 3e, support members 3b and 3f, support members 3c and 3g, and support members 3d and 3h are arranged to each air layer. In an upper part of FIG. 10A, the support members 3a to 3d are arranged to be displaced along the different radial direction. In a lower part of FIG. 10A, the support members 3e to 3h are arranged to be displaced along the different radial direction.

Further, as illustrated in FIG. 10B, the support members may be arranged to intermittently corresponding positions in the radial direction. Support members 3a and 3c are arranged intermittently along the same radial direction. Support members 3b and 3d are intermittently arranged at the position deviated by 90 degrees from the support members 3a and 3c along the same radial direction. The support members 3e and 3g are intermittently arranged at the position deviated by 90 degrees from the support members 3b and 3d along the same radial direction. Support members 3f and 3h are intermittently arranged at the position deviated by 90 degrees from the support members 3e and 3g along the same radial direction.

### <Third Variation>

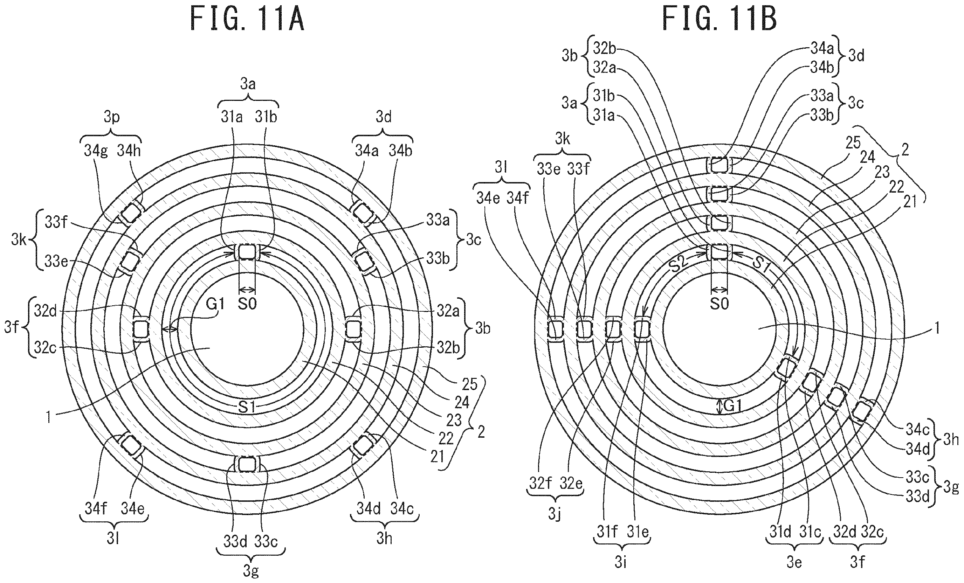

As the optical fiber according to the third variation of the first embodiment of the present invention, the number of support members may be different for each air layer having different radial positions. For example, as illustrated in FIG. 11A, the number of support members 3a, 3b, 3c, 3d, 3f, 3g, 3h, 3k, 31, and 3p may be larger, as the outer air layer along the radial direction. More specifically, a single support member 3a is arranged to the innermost air layer along the radial direction. Two support members 3b and 3f are arranged to the second air layer from the inside. Three support members 3c, 3g, and 3k are arranged to the third air layer from the inside. Four support members 3d, 3h, 31, and 3p are arranged to the outermost air layer.

For example, when the number of support members arranged to each air layer is the same, the closer the air layer is to the center side, there is a case where the distance between the support members, i.e., the spacing between the support members becomes narrows and becomes narrower than the double thickness of the corresponding air layer. On the other hand, according to the third variation of the first embodiment of the present invention, the number of support members arranged to each air layer is differentiated and the number of support members arranged to the air layer close to the center side is smaller than the number of support members arranged to the air layer close to the outer peripheral side so that, in all air layers, the distance between the support members is wider than the double thickness of the corresponding air layer.

### <Fourth Variation>

In the optical fiber according to the fourth variation of the first embodiment of the present invention, the support members may be arranged at the different distances between the support members along the circumferential direction of the optical fiber. For example, as illustrated in FIG. 11B, three support members 3a to 3d, support members 3e to 3h, and support members 3i to 31 are arranged to each air layer along the same radial direction. When the innermost air layer is focused, the distance between the support members S1 of the support member 3a and the support member 3e in the circumferential direction of the optical fiber is wider than the distance between the support members S2 of the support member 3a and the support member 3i along the circumferential direction of the optical fiber.

### <Fifth Variation>

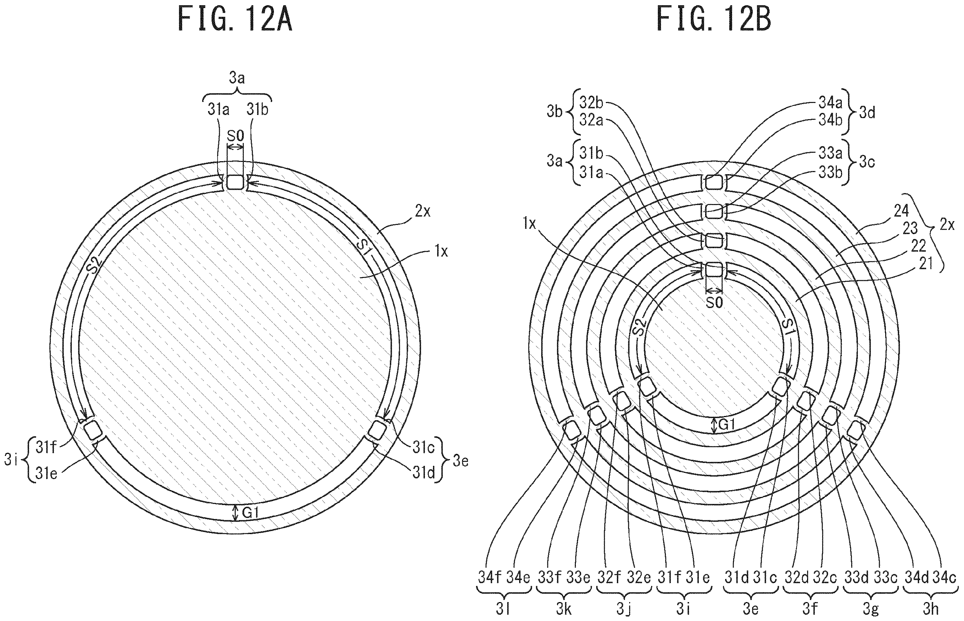

As illustrated in FIG. 12A, the optical fiber according to the fifth variation of the first embodiment of the present invention differs from the configuration of the air core fiber, i.e., the optical fiber according to the first embodiment of the present invention illustrated in FIG. 1 in that the optical fiber according to the fifth variation of the first embodiment of the present invention is an air clad fiber (Holey fiber) that includes the core 1x having a solid structure made of the glass or the like and the tubular layer 2x arranged around the core 1x via the air layer.

In the optical fiber according to the fifth variation, the air layer and the tubular layer 2x are included in the cladding layer that confines the light. A plurality of support plates 31a to 31f are arranged to the air layer between the core 1x and the tubular layer 2x. In the air clad fiber according to the fifth variation also, compared with the air clad fiber according to the comparative example illustrated in FIG. 12B, the number of a plurality of support plates 31a to 31f can be reduced and the degradation in the transmission characteristics can be suppressed.

As illustrated in FIG. 12B, the air clad fiber may be an air clad fiber having a plurality of tubular layers 22 to 25 concentrically arranged around the core 1x. The air clad fiber illustrated in FIG. 12B differs from the configuration of the air core fiber illustrated in FIG. 1 in that the core 1x has the solid structure.

### (Second Embodiment)

### <Configuration of Optical Fiber>

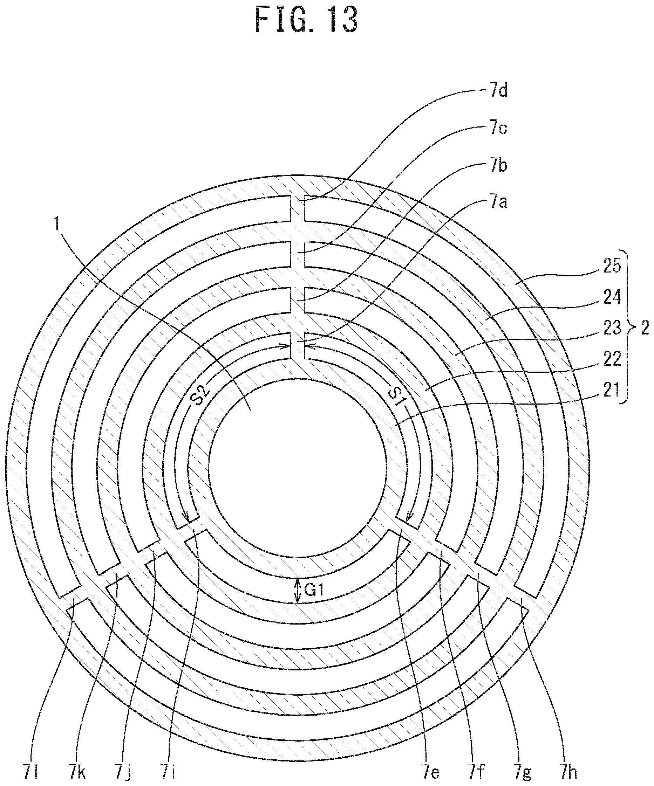

As illustrated in FIG. 13, the optical fiber according to the second embodiment of the present invention is the Bragg air core fiber that includes the tubular core guide tube 21 that defines the core (hole core) 1 inside and extends in the longitudinal direction of the optical fiber and the multi-layer cladding portion 2 that is arranged in multiple layers to configure the periodic structure by sandwiching a plurality of air layers (air cladding) around the core guide tube 21 and extends in the longitudinal direction of the optical fiber.

The multi-layer cladding portion 2 includes the tubular layers 22 to 25 configured from a plurality of dielectrics that are periodically arranged by alternately sandwiching the air layer around the core guide tube 21 and configures the Bragg type reflection structure. The air layers are defined between the core guide tube 21 and the tubular layer 22, between the tubular layers 22 and 23, between the tubular layers 23 and 24, and between the tubular layers 24 and 25 to configure the periodic structure. The spacing between the core guide tube 21 and the tubular layer 22, the spacing between the tubular layer 22 and the tubular layer 23, the spacing between the tubular layer 23 and the tubular layer 24, and the spacing between the tubular layer 24 and the tubular layer 25 are determined by considering the condition of the Bragg reflection (Bragg diffraction) with respect to the wavelength of the light transmitted through the core 1 of the optical fiber.

The optical fiber according to the second embodiment of the present invention differs from the support members 3a to 31 of the optical fiber according to the first embodiment of the present invention in that each of support members 7a to 71 arranged along the longitudinal direction of the optical fiber between the core guide tube 21 and the tubular layers 22 to 25 is the support member configured from one support plate. Although the support plates 7a to 71 configuring the support member have, for example, elongated rectangular (bar-like) cross-sectional shapes in a cross-sectional view perpendicular to the longitudinal direction of the optical fiber, the present invention is not limited to this. For example, the support plates 7a to 71 configuring the support member may be cylindrical or convex lens-like having a circular cross-sectional shape including the flat circle such as ellipse.

A plurality of (three) wall-like (plate-like) support plates 7a, 7e, and 7i are provided as the support member between the core guide tube 21 and the tubular layer 22 in a manner to connect the core guide tube 21 with the tubular layer 22. A plurality of (three) wall-shaped support plates 7b, 7f, and 7j are provided as the support member between the tubular layer 22 and the tubular layer 23 in a manner to connect the tubular layer 22 with the tubular layer 23. A plurality of (three) wall-shaped support plates 7c, 7g, and 7k are provided as the support member between the tubular layer 23 and the tubular layer 24 in a manner to connect the tubular layer 23 with the tubular layer 24. A plurality of (three) wall-shaped support plates 7d, 7h, and 71 are provided as the support member between the tubular layer 24 and the tubular layer 25 in a manner to connect the tubular layer 24 with the tubular layer 25.

As materials of the support plates 7a to 71 configuring the support member, the glass and the polymer such as the quartz glass are usable. The support plates 7a to 71 are preferably configured from the same material as the core guide tube 21 and the tubular layers 22 to 25. In particular, it is preferable for production that the viscosity of the materials configuring the support plates 7a to 71 is the same as the viscosity of the materials configuring the core guide tube 21 and the tubular layers 22 to 25. More specifically, if the materials of the support plates 7a to 71, the core guide tube 21, and the tubular layers 22 to 25, or viscosity characteristics of these materials are the same, since the materials configuring the support plates 7a to 71, the core guide tube 21, and the tubular layers 22 to 25 have the same characteristics with respect to the thermal process such as drawing, the controls of the shape and the like of the support plates 7a to 71 become easier. The support plates 7a to 71 configuring the support member may be configured from materials different from those of the core guide tube 21 and the tubular layers 22 to 25. Further, the support plates 7a to 71 configuring the support member may be configured from different materials.

In the optical fiber according to the second embodiment of the present invention, in a cross-sectional view perpendicular to the longitudinal direction of the optical fiber, the distance between the support members, i.e., the spacing between the support members in the circumferential direction of the optical fiber of the support plates 7a to 71 configuring the support member is wider than the double thickness of the air layer between the core guide tube 21 and the tubular layers 22 to 25 sandwiching the support plates 7a to 71. For example, when a support plate 7a is focused, the distance between the support members S1 of the support plate 7a and the support plate 7e that is spaced apart from the support plate 7a clockwise by about 120 degrees in the circumferential direction is wider than the double thickness (air gap) G1 of the air layer between the core guide tube 21 and the tubular layer 22. A distance between the support members S2 of the support plate 7a and a support plate 7i that is spaced apart counterclockwise by about 120 degrees from the support plate 7a in the circumferential direction is wider than the double thickness (air gap) G1 of the air layer between the core guide tube 21 and the tubular layer 22. When other support plates 7b to 71 are focused also, the same relationship as the support plate 7a is set.

The wall thickness (plate thickness) measured in the circumferential direction (circumferential direction in which center of core 1 is center of circle) of the optical fiber of the support plates 7a to 71 configuring the support member may be preferably set to the thickness in which the mode of the light transmitted through the core 1 may not be localized. For example, since wall thicknesses of the support plates 7a to 71 in the circumferential direction of the optical fiber depend on the wavelength of the light transmitted through the core 1, for example, when the wavelength of the light to be used is 1µm, the wall thickness of the support plates 7a to 71 in the circumferential direction of the optical fiber is preferably set to less than 1µm, i.e., that is shorter than the wavelength. The wall thickness of the support plates 7a to 71 in the circumferential direction of the optical fiber is set to the thickness in which the mode corresponding to the wavelength of the light transmitted through the core 1 may not be localized or as a specific example, the thickness of the support plates 7a to 71 is smaller than the wavelength of the light transmitted through the core 1 so that the leakage of the light to the outside via the support plates 7a to 71 can be prevented and the loss of the light transmitted through the core 1 can be suppressed.

Although FIG. 13 exemplifies a case where three support plates 7a to 71 are arranged to each air layer configuring the multi-layer cladding portion 2, the number of support plates distributed for each air layer present in the different radial positions is not particularly limited. The number of support plates arranged at each air layer is preferably as small as possible from the viewpoint of transmission characteristics, but the number is preferably three or more, for example, from the viewpoint of mechanical strength and stability of the structure. Although FIG. 13 exemplifies a case where the support plates 7a to 71 are arranged to be spaced apart by about 120 degrees at regular intervals, the support plates 7a to 71 may be arranged to be spaced apart by different distances between the support members.

In FIG. 13, support plates 7a to 7d arranged to the air layer at the different radial positions configuring the multi-layer cladding portion 2 are arranged on the straight line respectively along the same radial direction. Support plates 7e to 7h arranged to the air layer at the different radial positions are arranged on the straight line respectively along the same radial direction. Support plates 7i to 71 arranged to the air layer at the different radial positions are respectively arranged on the straight line along the same radial direction. The support plates 7a to 71 arranged to the air layer at the different radial positions may be respectively arranged on a straight line so as to be deviated along the different radial direction.

In the optical fiber according to the second embodiment of the present invention, since the distance between the support members of the support plates 7a to 71 in the circumferential direction of the optical fiber is wider than the double thickness of the air layer between the core guide tube 21 and the tubular layers 22 to 25 sandwiching the support plates 7a to 71, the number of the support plates 7a to 71 can be reduced, and the light leakage via the support plates 7a to 71 can be suppressed.

### <Method for Producing Optical Fiber>

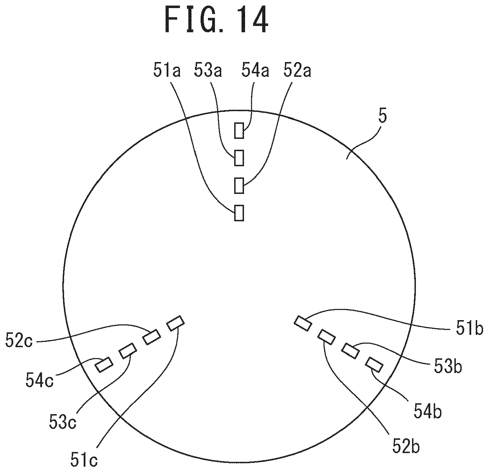

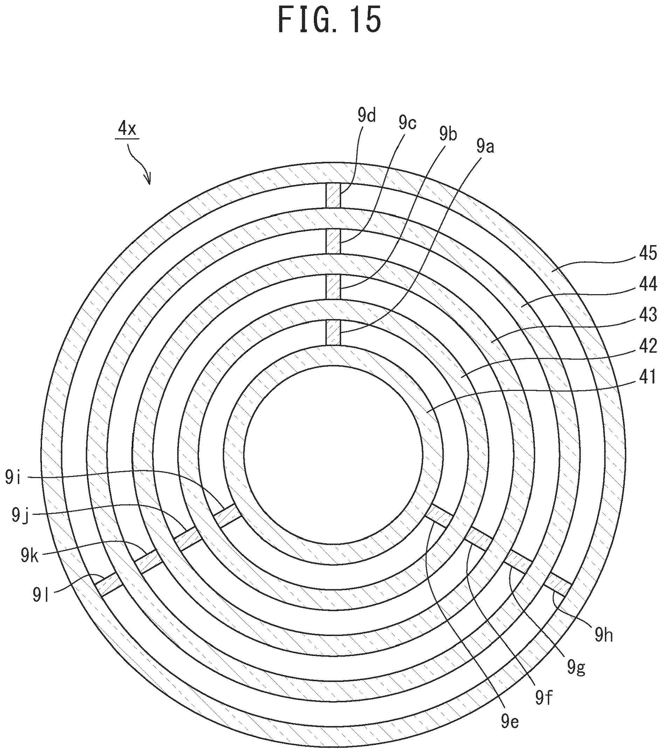

Next, one example of the method for producing the optical fiber according to the second embodiment of the present invention is described. The method for producing the optical fiber described below is merely an example and can be realized by various other producing methods as long as it is within the scope of the gist described in CLAIMS.
(a) First, as illustrated in FIG. 3, the tubular core base material 41 and the plurality of tubular layer base material layers 42 to 45 made of the quartz or the like are concentrically arranged so as to be periodically spaced apart. End portions of the core base material 41 and the tubular layer base material layers 42 to 45 are temporary joint with the tape 8 and the air gap between the core base material 41 and the tubular layer base material layers 42 to 45 is maintained. The adhesive or the like may be used instead of the tape 8.
(b) The top plate (round plate) 5 made of the quartz glass or the like as illustrated in FIG. 14A is prepared. To each of positions where a plurality of plate-like members (support base materials) are passed through of the top plate 5, rectangular apertures (holes) 51a to 51c, 52a to 52c, 53a to 53c, and 54a to 54c are hollowed out using the drill or the like. The bottom plate (round plate) 6 that opposes the top plate 5 illustrated in FIG. 4B is separately prepared. To the bottom plate 6 also, apertures corresponding to the aperture 51a to 51c, 52a to 52c, 53a to 53c, and 54a to 54c of the top plate 5 may be provided. One end of the temporary joint core base material 41 and the plurality of tubular layer base material layers 42 to 45 illustrated in FIG. 3 and the bottom plate 6 are matched, and the temporary fixation is performed by the heating or the like.
(c) Next, to each of the apertures (holes) 51a to 51c, 52a to 52c, 53a to 53c, and 54a to 54c of the top plate 5, a plurality of (12) plate-like members (support base materials) such as glass plates are passed through and the plate-like members are inserted between the core base material 41 and the plurality of tubular layer base material layers 42 to 45 while aligning them. The plate-like members are fused to the inner surface or the outer surface of the core base material 41 and the plurality of tubular layer base material layers 42 to 45 by adding the heat or the like. As a result, as illustrated in the cross section of FIG. 15, the fiber base material 4 is obtained in which a plurality of plate-like members 9a to 91 are integrated and fixed so as to be spaced apart in the circumferential direction between the core base material 41 and the tubular layer base material layers 42 to 45.
(d) By conducing the drawing of heating and stretching the fiber base material 4, the optical fiber illustrated in FIG. 13 is completed. In the drawing, a plurality of support plates 7a to 71 are formed one by one from a plurality of plate-like members 9a to 91. As illustrated in FIG. 13, the distance between the support members of the support plates 7a to 71 in the circumferential direction of the optical fiber is wider than the double thickness of the air layer between the core guide tube 21 and the tubular layers 22 to 25 sandwiching the support plates 7a to 71. In this way, the optical fiber illustrated in FIG. 13 is completed.

In the method for producing the optical fiber according to the second embodiment of the present invention, the distance between the support members, i.e., the spacing between the support members of the support plates 7a to 71 in the circumferential direction of the optical fiber is wider than the double thickness of the air layer between the core guide tube 21 and the tubular layers 22 to 25 sandwiching the support plates 7a to 71. Accordingly, compared with the first and second comparative examples, the number of the support plates 7a to 71 can be reduced and it is possible to realize the optical fiber that can suppress the degradation in the transmission characteristics caused by the support plates 7a to 71.

A plurality of support plates 7a to 71 can be formed one by one from a plurality of plate-like members 9a to 91. Accordingly, compared with the first and second comparative examples, since the thickness of the support plates 7a to 71 can be reduced, the light leakage via the support plates 7a to 71 can be reduced.

### <First Variation>

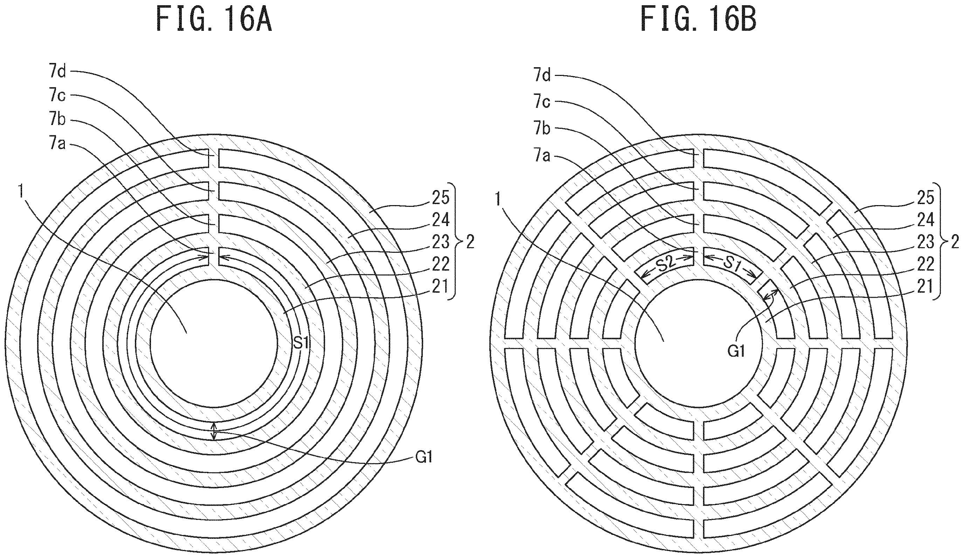

As the optical fiber according to the first variation of the second embodiment of the present invention, the number of support plates arranged to each air layer may be different from that of the optical fiber according to the second embodiment of the present invention. For example, as illustrated in FIG. 16A, the support plates 7a to 7d may be arranged to each air layer one by one. In this case also, the distance between the support members in the circumferential direction of the optical fiber of the support plates 7a to 7d is wider than the double thickness of the air layer between the core guide tube 21 and the tubular layers 22 to 25 sandwiching the support plates 7a to 71. For example, when the support plate 7a is focused, the distance between the support members S1 of the side faces of the support plate 7a in the circumferential direction of the optical fiber is wider than the double thickness G1 of the air layer between the core guide tube 21 and the tubular layer 22 sandwiching the support plate 7a.

As illustrated in FIG. 16B, in addition to the support plates 7a to 7d, eight support plates whose reference numerals are omitted may be arranged to each air layer. Further, although not illustrated, for example, two support plates may be arranged to each air layer, four support plates may be arranged to each air layer, six support plates may be arranged to each air layer, and 12 support plates may be arranged to each air layer. In this way, the number of support plates arranged to each air layer is not limited. In at least one or more layers out of each air layer along the radial direction, the distance between the support members of the support member in the circumferential direction of the optical fiber may be wider than the double thickness (air gap) of the air layer in which the support member is arranged.

### <Second Variation>

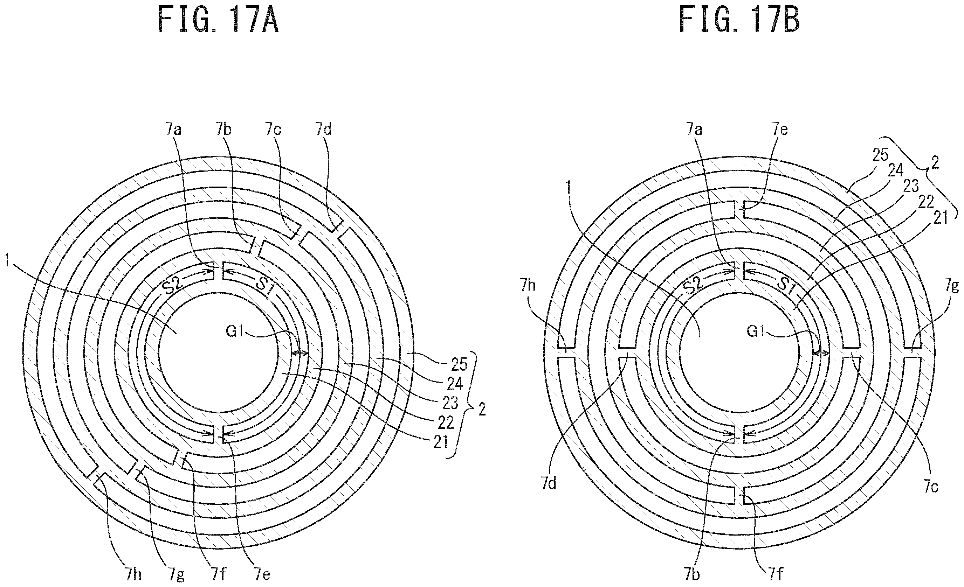

As the optical fiber according to the second variation of the second embodiment of the present invention, the support plates arranged to each air layer may be arranged to include an individual position of each air layer as the different radial direction. For example, as illustrated in FIG. 17A, two support plates 7a and 7e, the support plates 7b and 7f, support plates 7c and 7g, and support plates 7d and 7h are arranged to each air layer. In an upper part of FIG. 17A, the support plates 7a to 7d are arranged to be displaced along the different radial direction. In a lower part of FIG. 17A, the support plates 7e to 7h are arranged to be displaced along the different radial direction.

As illustrated in FIG. 17B, the support plates may be arranged to the intermittently corresponding position in the radial direction. Support plates 7a and 7e are arranged intermittently along the same radial direction. Support plates 7c and 7g are arranged to the position deviated by 90 degrees from the support plates 7a and 7e and are intermittently arranged along the same radial direction. The support plates 7b and 7f are arranged to the position deviated by 90 degrees from the support plates 7c and 7g and are intermittently arranged along the same radial direction. Support plates 7d and 7h are arranged to the position deviated by 90 degrees from the support plates 7b and 7f and are intermittently arranged along the same radial direction.

### <Third Variation>

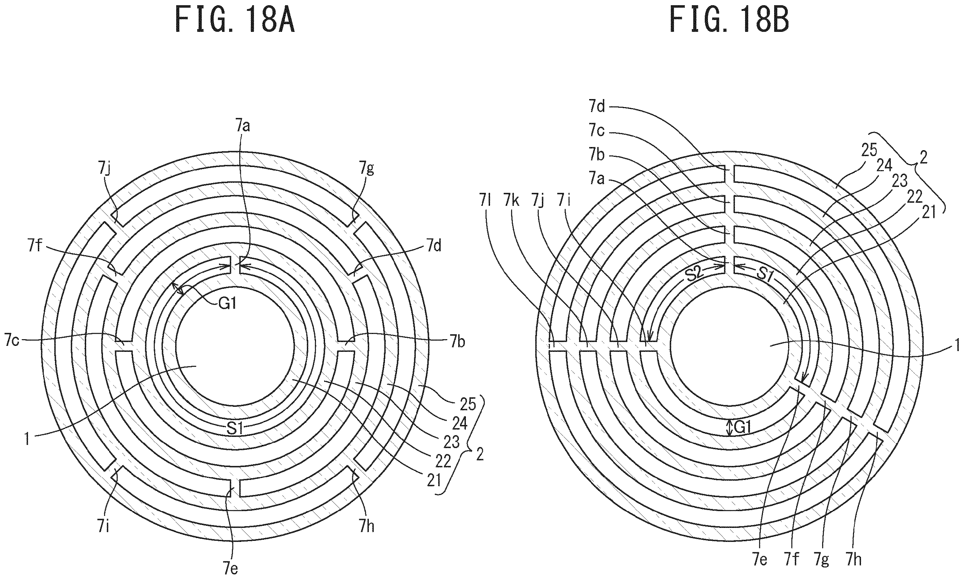

As the optical fiber according to the third variation of the second embodiment of the present invention, the number of support plates may differ for each air layer having different radial positions. For example, as illustrated in FIG. 18A, as the outer air layer along the radial direction, the number of support plates 7a to 7j may be larger. More specifically, one support plate 7a is arrange to the innermost air layer along the radial direction. Two support plates 7b and 7c are arranged to the second air layer from the inside. Three support plates 7d to 7f are arranged to the third air layer from the inside. Four support plates 7g to 7j are arranged to the outermost air layer. The number of support members arranged to the air layer close to the center side is smaller than the number of support members arranged to the air layer close to the outer peripheral side, so that in all air layers, the distance between the support members may be wider than the double thickness of the corresponding air layer.

### <Fourth Variation>

As the optical fiber according to the fourth variation of the second embodiment of the present invention, the support plates may be arranged at the different distance between the support members along the circumferential direction of the optical fiber. For example, as illustrated in FIG. 18B three support plates 7a, 7e, and 7i, support plates 7b, 7f, and 7j , support plates 7c, 7g, and 7k, and support plates 7d, 7h, and 71 are arranged to each air layer and are arranged on the straight line along the same radial direction. When the innermost air layer is focused, the distance between the support members S1 of the support plate 7a and a support plate 7e in the circumferential direction of the optical fiber is wider than the distance between the support members S2 of the support plate 7a and the support plate 7i.

### <Fifth Variation>

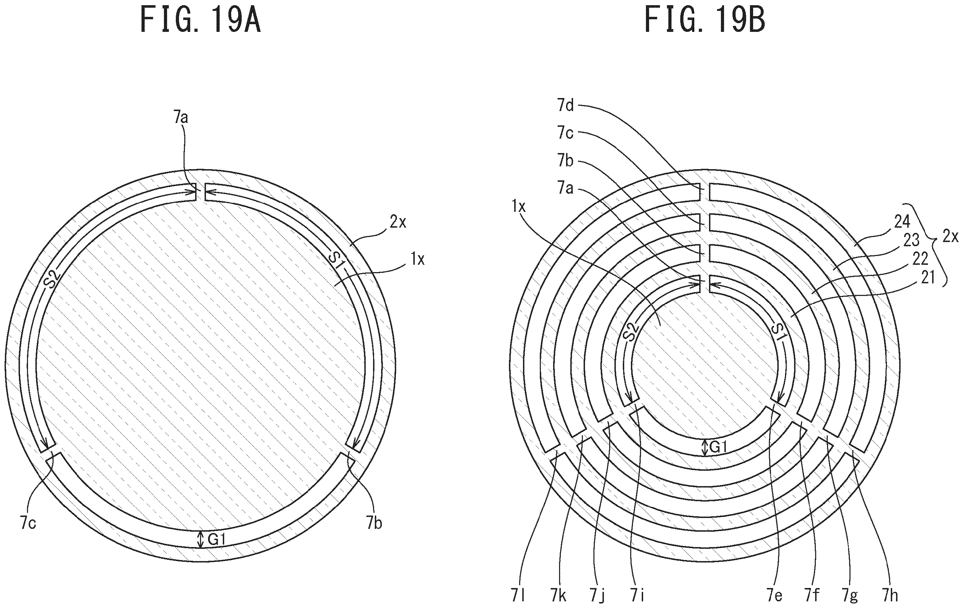

The optical fiber according to the fifth variation of the second embodiment of the present invention differs from the configuration of the optical fiber, i.e., the air core fiber according to the second embodiment of the present invention illustrated in FIG. 13 in that the optical fiber according to the fifth variation of the second embodiment of the present invention is, as illustrated in FIG. 19A, an air clad fiber (Holey fiber) that includes the core 1x having the solid structure made of the glass or the like and the tubular layer 2x arranged around the core 1x via the air layer.

In the optical fiber according to the fifth variation, the air layer and the tubular layer 2x are included in the cladding layer that confines the light. A plurality of support plates 7a to 7c are arranged to the air layer between the core 1x and the tubular layer 2x. In the air clad fiber according to the fifth variation also, compared with the air clad fiber according to the comparative example illustrated in FIG. 31, the number of the support plates 7a to 7c can be reduced and the degradation in the transmission characteristics can be suppressed. The air clad fiber may be an air clad fiber having a plurality of tubular layers 22 to 25 concentrically arranged around the core 1x as illustrated in FIG. 19B. The air clad fiber illustrated in FIG. 19B differs from the configuration of the air core fiber illustrated in FIG. 13 in that the core 1x has the solid structure.

### <Example>

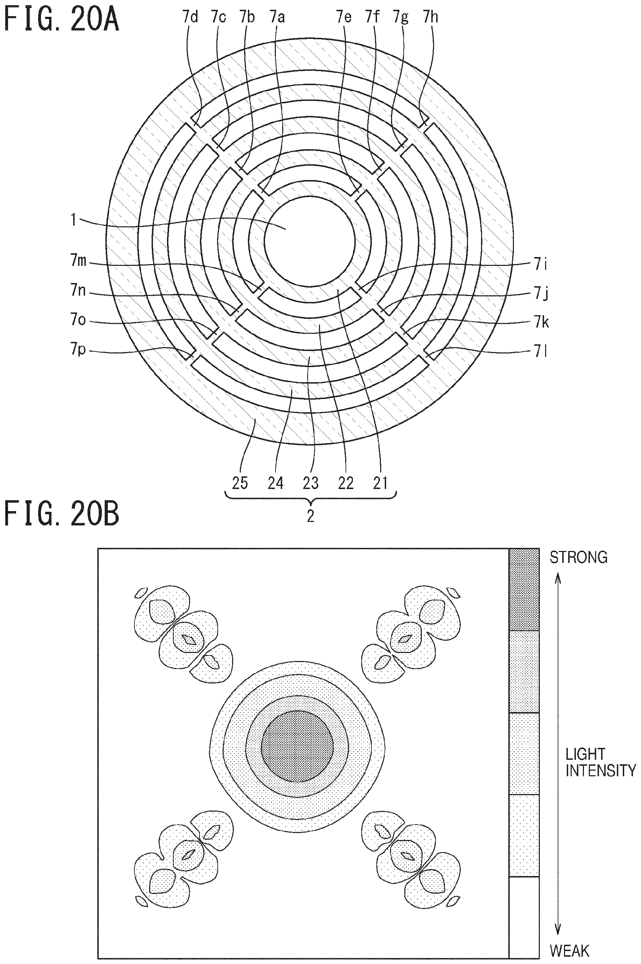

The Bragg type hole core fiber according to the example of the second embodiment of the present invention has a structure in which the hole core 1 is defined in the tubular layer 21 as illustrated in FIG. 20A and four support plates 7a to 7p are arranged to each air layer sandwiched by tubular layers 21 to 25. FIG. 20B illustrates the light intensity distribution of the Bragg type hole core fiber illustrated in FIG. 20A. In FIG. 20B, as the level of the light intensity is higher, the hatching is finer and the light intensity is indicated in a stepwise manner. From FIG. 20B, it is evident that at the position corresponding to the hole core 1, the light intensity is the highest, at the position corresponding to the support plates 7a to 7p also, the light intensity distribution is recognized, and the light leakage occurs via the support plates 7a to 7p.

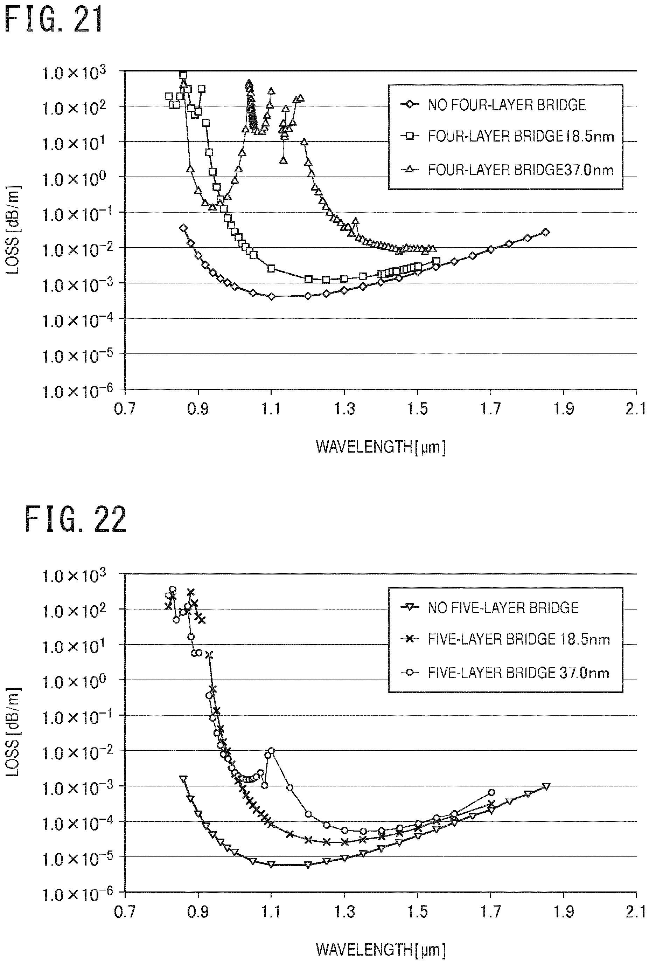

The simulation is conducted on the confinement loss of the Bragg type hole core fiber illustrated in FIG. 20A. FIG. 21 is the result of the confinement loss simulation in which in the structure of FIG. 20A, the number of tubular layers is four, the support plate (bridge) is not provided and the thickness is 18.5nm and 38nm. FIG. 22 is the result of the confinement loss simulation in which in the structure of FIG. 20A, the number of tubular layers is five, the support plate (bridge) is not provided, and the thickness is 18.5nm and 38nm. As illustrated in FIGS. 21 and 22, although the confinement loss characteristics are affected by the thickness of the support plate, since each support plate is thin and the number of support plates is small, the sufficiently low confinement loss characteristic is obtained. Even with other structures, it is thought that it is advantageous from the viewpoint of the suppression of the leakage loss that the support plate can be made thin and the number of the support plates is small.

### (Other Embodiments)

As described above, although the present invention has been described by the first and second embodiments, it should not be understood that the descriptions and the drawings configuring a part of this disclosure limit the present invention. From this disclosure, various alternative embodiments, examples and operational technologies will be evident to a person skilled in the art.

For example, in the first embodiment of the present invention, as illustrated in FIG. 1, a case where in each air layer having the different radial positions, the distance between the support members of the support members 3a to 31 in the circumferential direction of the optical fiber is wider than the double thickness (air gap) G1 of the air layer in which the support members 3a to 31 are arranged is exemplified, but in at least one layer out of each air layer along the radial direction, if the relationship between the distances between the support members S1 and S2 and the air gap G1 holds, it is within the scope of the present invention.

According to the first embodiment of the present invention, as illustrated in FIG. 1, although a structure in which the multi-layer cladding portion 2 has 4 layers of tubular layers 22 to 25 along the radial direction is exemplified, it is enough if the multi-layer cladding portion 2 has at least one air layer, and the number of the tubular layers 22 to 25 is not limited. For example, the multi-layer cladding portion 2 may have one, two, or three tubular layers and may have five or more tubular layers along the radial direction.

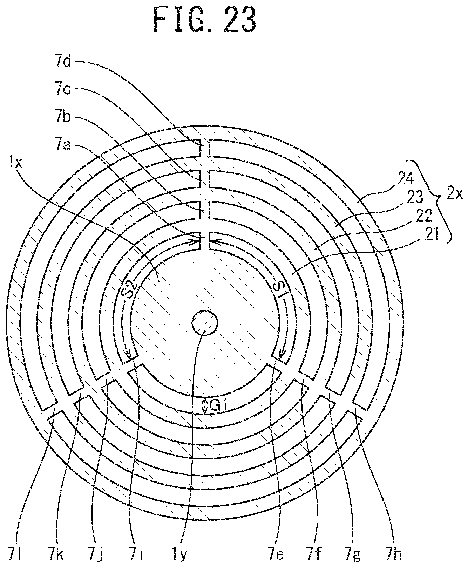

As illustrated in FIG. 23A, the core 1x has the solid structure (solid core) made of the glass or the like and the core 1x may include a portion (refractive index change portion) 1y having a refractive index different from that of the core 1x. For example, the refractive index change portion 1y extends in parallel with the longitudinal direction of the optical fiber and is located at the center of the core 1x in the cross section perpendicular to the longitudinal direction of the optical fiber. The refractive index change portion 1y has the refractive index higher than the refractive index of the core 1x and functions as the center core. The refractive index of the refractive index change portion 1y may be, depending on the type of the optical fiber, lower than the refractive index of the core 1x. The size, the number, and the arrangement position of the refractive index change portion 1y are not particularly limited and can be appropriately set depending on the type of the optical fiber.

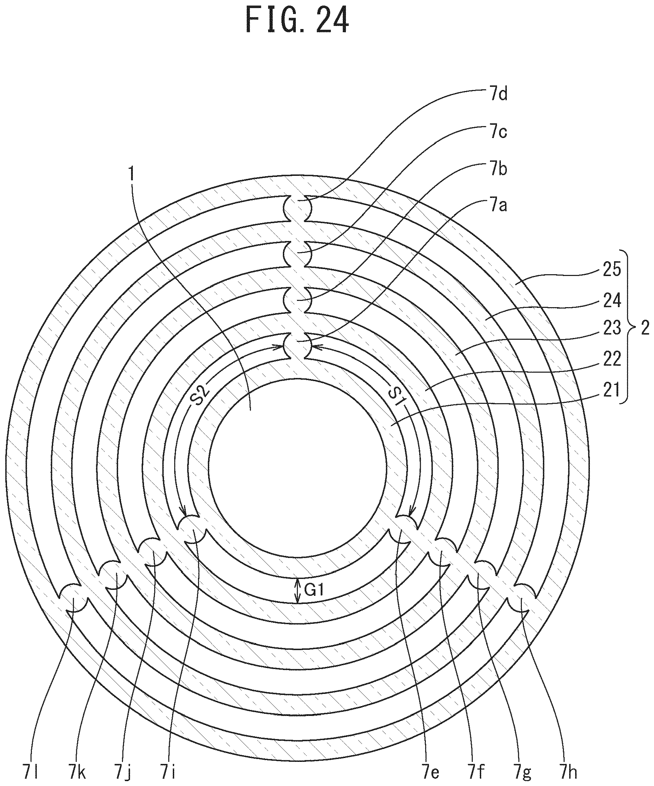

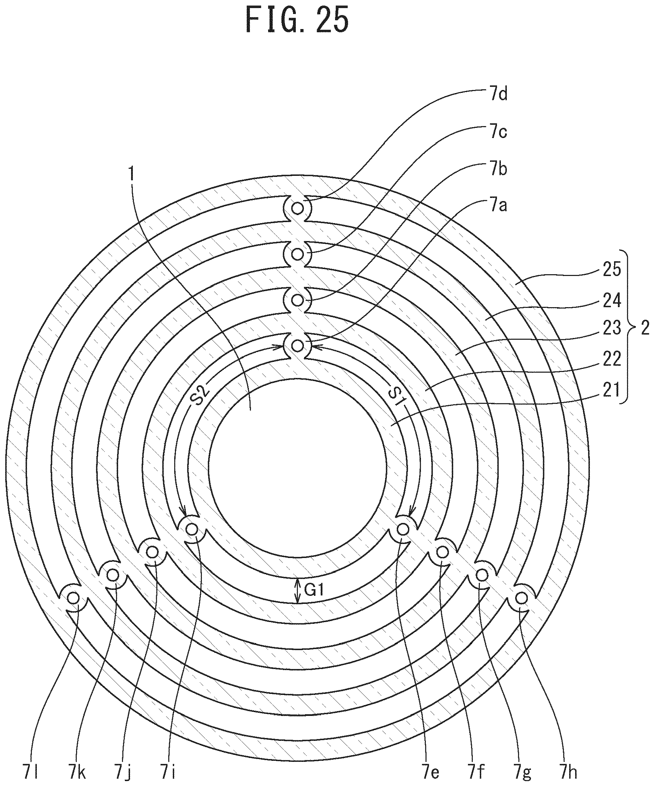

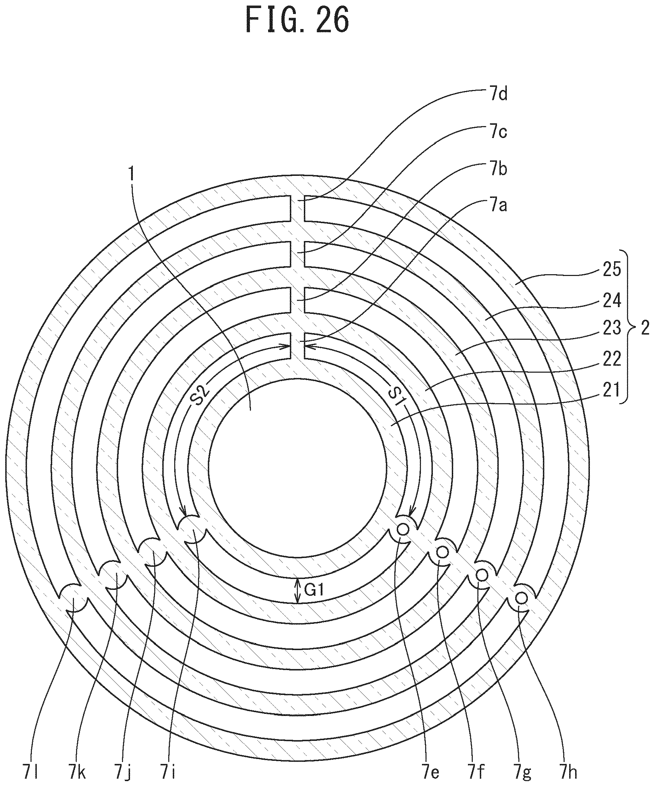

As illustrated in FIG. 24, the support plates 7a to 71 configuring the support member may be the solid body having the circular shape in the cross section perpendicular to the longitudinal direction of the optical fiber. Although FIG. 24 exemplifies the circular cross-sectional shape, the support plate is not limited to this, and the support plate may have, for example, polygonal cross-sectional shapes such as triangle and quadrangle. Further, as illustrated in FIG. 25, the support plates 7a to 71 configuring the support member may be ring-shaped in the cross section perpendicular to the longitudinal direction of the optical fiber. As illustrated in FIG. 26, support plates 7a to 7d, 7e to 7h, and 7i to 71 configuring the support member may have mutually different shapes. In this way, the shape of the support plates 7a to 71 can be appropriately set depending on the type of the optical fiber.

By using the optical fiber according to the first and second embodiments of the present invention, it is possible to construct a new optical system making full use of various unique characteristics. In the optical fiber according to the first and second embodiments of the present invention, since most of the portion of the core is surrounded by the air, regardless of whether the core is the air core or the glass core, it is evident that the ultimate high NA (light-harvesting) can be obtained. For this reason, the optical fiber can be used as the fiber that collects and propagates the LED, the sun light and the like that are difficult to be converged. For example, the optical fiber according to the first and second embodiments of the present invention can be applied to the sterilization, the water purification, the illumination, the plant factory, the visible light communication, the photovoltaic generation and the like.

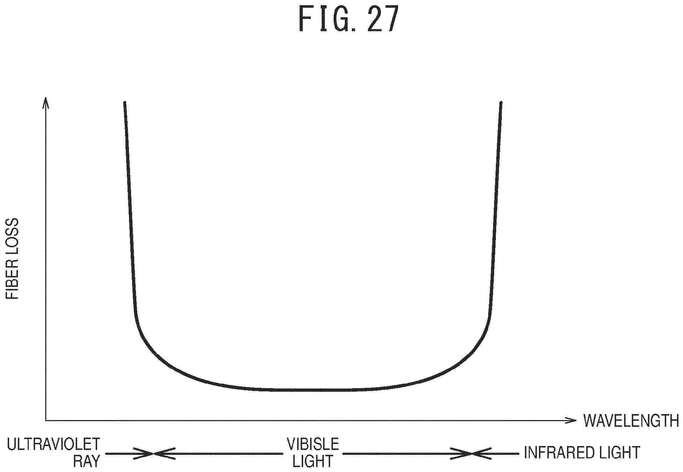

For example, when the optical fiber is applied to the sunlight illumination, selectively sending the light of the specific wavelength can be also considered as the added value. The optical system can be obtained in which, for example, as illustrated in FIG. 27, by optimizing the fiber loss characteristics, only the visible light necessary for the sunlight illumination is sent through the optical fiber, and infrared rays that generate the harmful ultraviolet rays and the heat are blocked with the optical fiber. The short wavelength on the UV side can be blocked by, for example, increasing the confinement loss by the bandgap blocking, the UV absorption edge adjustment, the impurity (for example, metal and the like) absorption adjustment, the adjustment of glass defect absorption, the confinement loss adjustment, the bending loss adjustment and the like. On the other hand, the long wavelength on the infrared side can be blocked by increasing the confinement loss by the bandgap blocking, impurity absorption (for example, OH absorption) adjustment, the confinement loss adjustment, the bending loss adjustment and the like.

In the optical system using the optical fiber according to the first and second embodiments of the present invention, as illustrated in FIG. 27, by optimizing the fiber loss characteristics, the specific wavelength can be selectively propagated. Since it is not necessary to incorporate the optical system for blocking the extra light, the simple system can be constructed. Of course, the application of blocking the wavelengths other than the required wavelength is not limited only to the application to the sunlight illumination, and various other applications can be considered.

As another example of the optical system using the optical fiber according to the first and second embodiments of the present invention, the high power delivery application can be considered. The high NA characteristic is important even in the high power field from the viewpoint of the ability to collect a lot of light and high power the light. Besides that, characteristics such as the suppression of the nonlinear distortion at the time of the high power input and the suppression of the light leakage when bent can be realized by the optical fiber according to the first and second embodiments of the present invention, and it can be said that the characteristics suitable for the high power application are obtained.

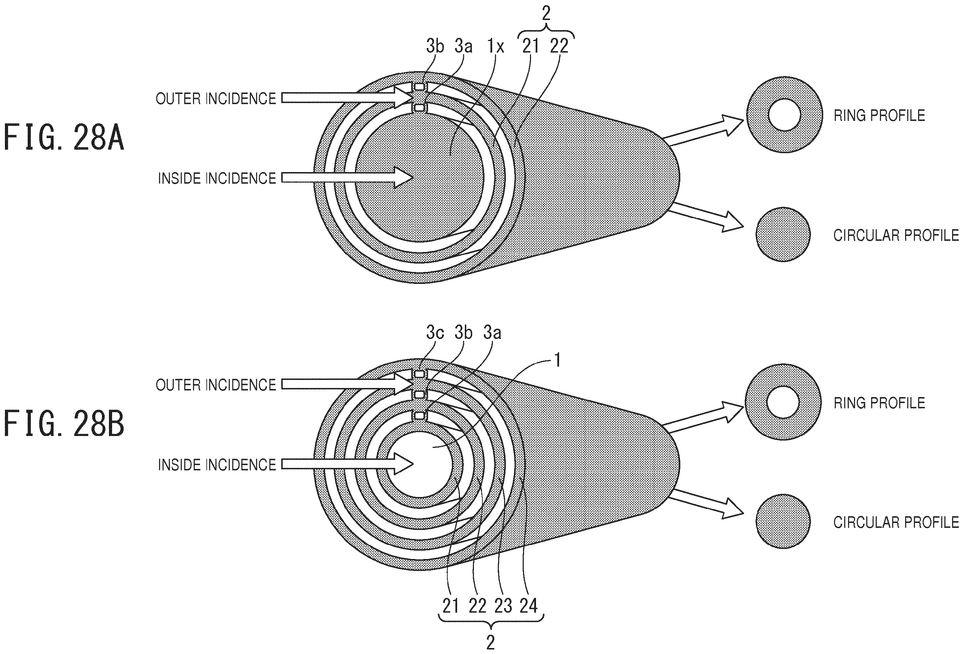

For example, as illustrated in FIG. 28A, using a structure including independent tubular layers 21 and 22 around the core 1x and including two or more air layers, by switching the incidence position to the core 1x and tubular layers 21 and 22 around the core 1x, a circular profile and a ring profile of Gaussian type or flat type required for the processing application and the like can be formed. More specifically, by selectively entering the light into the inner core 1x, a circular profile can be formed and by selectively entering the light into the outer tubular layers 21 and 22, a ring profile can be formed. The switching of the incidence position may be manually conducted with, for example, a stage or the like, and the mechanism may be introduced so that the switching is automatically conducted. As illustrated in FIG. 28B, even with a hole core type optical fiber in which the core 1 is the air, tubular layers 21 to 24 are provided around the core 1, and two or more air layers are provided, similarly the circular profile and the ring profile can be realized, and in the case of the hole core, the high-power resistance can be also obtained.

Further, in the vacancy clad fiber and the hole core fiber, the application can be considered in which the cooling gas is flowed to the outer hole ring (air layer) and at the time of high power, the fiber is cooled. In this case also, since the number of support plates arranged to the hole ring (air layer) is small, there is no need to separately introduce the cooling gas and the liquid to the so-called subdivided room, and the introduction of the medium becomes easy.

The optical fiber according to the present invention can have features such as the low loss, the low-latency, the low nonlinearity, the low bending loss, the interference with the media, the excellent environmental resistances and the like, and various applications such as the transmission medium of the data com and the telecom, the sensor using the amplification medium and the interference, the transmission medium used in the special environment such as radiation and the like can be considered.

Of course, these are examples of the applications using the optical fiber according to the present invention, and various application developments making full use of the characteristics of the optical fiber according to the present invention are enabled by the present invention. According to the present invention, it is possible not only to easily realize the new high-performance optical fiber superior in terms of the high NA characteristic and the like, but also to apply various application developments using the optical fiber. The present invention can be applied to various optical fibers, optical systems, and methods for producing the optical fiber without departing from the present invention described in claims.

### Reference Signs List

1, 1x, 101, 101x Core
1y Refractive index change portion
2, 102 Multilayer clad portion
2x, 102x Tubular layer
3a to 3x, 7a to 7p Support member
4 Fiber base material
5 Top plate
6 Bottom plate
8 Tape
21, 121 Core guide tube
22 to 25, 122 to 124 Tubular layer
31a to 311, 32a to 321, 33a to 331, 34a to 341, 131 to 133 Support plate
41 Core base material
42 to 45 Tubular layer base material layer
51a to 51c, 52a to 52c, 53a to 53c, 54a to 54c Aperture
61a to 61d, 62a to 62d, 63a to 63d Capillary

## Claims

1. An optical fiber comprising:
a core;
a tubular layer concentrically arranged around the core via an air layer; and
a support member configured to be arranged to the air layer and configured to connect the core with the tubular layer,
wherein, in a cross-sectional view of a longitudinal direction of the optical fiber, a distance between the support members in a circumferential direction of the optical fiber is wider than a double thickness of the air layer in which the support member is arranged.

2. The optical fiber according to claim 1,
wherein the support member is configured from one support plate or two support plates paired in a wall shape.

3. The optical fiber according to claim 1,
wherein the support member is configured from one support plate or two support plates paired in a wall shape with a member inner wall spacing being narrower than the distance between the support members.

4. The optical fiber according to any one of claims 1 to 3,
wherein the core is a hole core inside a tubular core guide tube.

5. The optical fiber according to any one of claims 1 to 3,
wherein the core is made of a glass; and
the air layer and a tubular layer arranged via the air layer are included in a cladding layer configured to confine light.

6. The optical fiber according to any one of claims 1 to 3 and 5,
wherein the core is made of a glass; and
the core includes a part different in a refractive index from the core.

7. The optical fiber according to any one of claims 1 to 6,
wherein the tubular layer is a quartz glass or a dopant-doped quartz glass.

8. The optical fiber according to any one of claims 1 to 7,
wherein a plurality of the support members are arranged to be spaced apart in a circumferential direction of the optical fiber; and
the distance between the support members of different support members in a circumferential direction of the optical fiber is wider than a double thickness of the corresponding air layer.

9. The optical fiber according to any one of claims 1 to 8,
wherein the support member and the tubular layer have a same viscosity.

10. The optical fiber according to any one of claims 1 to 9,
wherein the support member and the tubular layer are configured from a same material.

11. The optical fiber according to claim 2 or 3,
wherein a thickness measured in the circumferential direction of each of the support plate or the two support plates paired in the wall shape is a dimension where a mode of light transmitted through the core may not be localized.

12. The optical fiber according to claim 2 or 3,
wherein a thickness in a circumferential direction of the optical fiber of each of the support plate or the two support plates paired in the wall shape is thinner than a wavelength of light transmitted through the core.

13. The optical fiber according to any one of claims 1 to 12,
wherein a plurality of the tubular layers are periodically and concentrically arranged by sandwiching a plurality of air layers;
the support member is arranged to each of the plurality of air layers; and,
in at least one or more air layers, the distance between the support members is wider than a double thickness of the corresponding air layer.

14. The optical fiber according to claim 13,
wherein the support member arranged to each of the plurality of air layers is arrayed on a straight line along a same radial direction.

15. The optical fiber according to claim 13,
wherein the support member is arranged to include a position of each of the plurality of air layers, in a different radial direction.

16. The optical fiber according to claim 14 or 15,
wherein the number of the support member differs for each of the plurality of air layers.

17. The optical fiber according to claim 16,
wherein the number of the support members arranged to the air layer close to a center side is smaller than the number of the support members arranged to the air layer close to an outer peripheral side; and
in all of the air layers, the distance between the support members is wider than a double thickness of corresponding the air layer.

18. An optical system,
wherein the optical fiber according to any one of claims 1 to 17 is used.

19. A method for producing an optical fiber comprising:
concentrically arranging a tubular layer base material layer around a core base material by sandwiching an air layer;
inserting a support base material part in the air layer in a manner to connect the core base material with the tubular layer base material layer and forming a fiber base material; and
melting and drawing the fiber base material such that the core base material serves as a core or a core guide tube, the tubular layer base material layer serves as a tubular layer, and the serves as a support member,
wherein in a cross-sectional view of a longitudinal direction of the optical fiber, a distance between the support members in a circumferential direction of the optical fiber is wider than a double thickness of the air layer in which the support member is arranged.

20. The method for producing the optical fiber according to claim 19,
wherein the support base material part is a capillary; and
the drawing is performed such that a wall of the capillary serves as a pair of support plates with each other.
